(19) Europäisches Patentamt
European Patent Office
Office européen des brevets

(11) **EP 3 155 074 B1**

(12) **FASCICULE DE BREVET EUROPEEN**

(45) Date de publication et mention de la délivrance du brevet:
**18.04.2018 Bulletin 2018/16**

(21) Numéro de dépôt: **15730989.9**

(22) Date de dépôt: **09.06.2015**

(51) Int Cl.:
*C10G 45/08* (2006.01)    *B01J 21/12* (2006.01)
*B01J 23/04* (2006.01)    *B01J 27/16* (2006.01)
*B01J 35/10* (2006.01)    *B01J 37/03* (2006.01)
*B01J 37/08* (2006.01)    *B01J 37/20* (2006.01)
*B01J 21/04* (2006.01)    *B01J 23/00* (2006.01)
*B01J 23/882* (2006.01)    *B01J 23/883* (2006.01)
*B01J 23/888* (2006.01)    *B01J 27/188* (2006.01)
*B01J 27/19* (2006.01)    *B01J 35/00* (2006.01)
*B01J 35/02* (2006.01)    *B01J 37/00* (2006.01)
*B01J 37/02* (2006.01)

(86) Numéro de dépôt international:
**PCT/EP2015/062827**

(87) Numéro de publication internationale:
**WO 2015/189201 (17.12.2015 Gazette 2015/50)**

(54) **PROCEDE D'HYDROTRAITEMENT DE COUPES GAZOLES UTILISANT UN CATALYSEUR A BASE D'UNE ALUMINE MESOPOREUSE AMORPHE AYANT UNE CONNECTIVITE ELEVEE**

VERFAHREN ZUR HYDROBEHANDLUNG VON DIESELSCHNITTEN UNTER VERWENDUNG EINES KATALYSATORS, DER AUS EINEM MESOPORÖSEN AMORPHEN ALUMINIUMOXID MIT HOHER KONNEKTIVITÄT GEFERTIGT IST

METHOD FOR THE HYDROTREATMENT OF DIESEL CUTS USING A CATALYST MADE FROM AN AMORPHOUS MESOPOROUS ALUMINA HAVING HIGH CONNECTIVITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2014 FR 1455424**

(43) Date de publication de la demande:
**19.04.2017 Bulletin 2017/16**

(73) Titulaire: **IFP Energies nouvelles
92500 Rueil-Malmaison (FR)**

(72) Inventeurs:
• **BOUALLEG, Malika
69100 Villeurbanne (FR)**
• **DEVERS, Elodie
69007 Lyon (FR)**
• **GUICHARD, Bertrand
38140 Izeaux (FR)**

(74) Mandataire: **Schmitt, Nicolas A.J. et al
IFP Energies nouvelles
Département Propriété Industrielle
Rond-point de l'Echangeur de Solaize
BP3
69360 Solaize (FR)**

(56) Documents cités:
WO-A1-00/41811        FR-A1- 2 972 648
US-A1- 2011 000 824    US-A1- 2012 122 659

• HAILING LIU ET AL: "Determination of the connectivity of porous solids from nitrogen sorption measurements - II. Generalisation", CHEMICAL ENGINEERING SCIENCE, vol. 47, no. 17-18, 1 décembre 1992 (1992-12-01), pages 4393-4404, XP055165768, ISSN: 0009-2509, DOI: 10.1016/0009-2509(92)85117-T cité dans la demande

**EP 3 155 074 B1**

**Description**

**Domaine technique**

La présente invention se rapporte au domaine des hydrotraitements de charges hydrocarbonées de type gazole.

Elle a principalement pour objet l'utilisation d'un catalyseur à base d'une alumine spécifique dans des procédés permettant l'hydrotraitement de charges de type gazole. En particulier, la présente invention se rapporte à l'utilisation dans un procédé d'hydrotraitement d'au moins une coupe gazole ayant une température moyenne pondérée (TMP) comprise entre 240°C et 350°C d'un catalyseur comprenant au moins un métal du groupe VIB et/ou au moins un métal du groupe VIII de la classification périodique et un support comprenant une alumine mésoporeuse amorphe présentant une connectivité très élevée ainsi qu'avantageusement une distribution poreuse spécifique par rapport aux alumines de l'art antérieur. Ladite alumine mésoporeuse amorphe est avantageusement mise en forme à partir d'un gel d'alumine présentant une haute dispersibilité, ledit gel d'alumine étant lui-même obtenu par précipitation d'au moins un sel d'aluminium selon un procédé spécifique.

Plus particulièrement, la présente invention se rapporte à l'utilisation dans un procédé d'hydrotraitement de ladite charge hydrocarbonée d'un catalyseur comprenant un support comprenant une alumine mésoporeuse amorphe mise en forme à partir d'un gel d'alumine, ledit gel d'alumine étant préparé selon un procédé de préparation par précipitation spécifique, permettant l'obtention d'au moins 40% poids d'alumine en équivalent $Al_2O_3$ par rapport à la quantité totale d'alumine formée à l'issue de la ou les étapes de précipitation et plus généralement à l'issue des étapes de préparation du gel d'alumine, dès la première étape de précipitation, la quantité d'alumine formée à l'issue de la première étape de précipitation pouvant même atteindre 100%.

**État de la technique antérieure**

Le durcissement des normes de pollution automobile en 2009 dans la communauté européenne contraint les raffineurs à réduire très fortement la teneur en soufre dans les gazoles et les essences, au maximum à 10 parties par million poids (ppm) de soufre dans les gazoles au 1er janvier 2009, contre 50 ppm au 1er janvier 2005 (mesurée par la méthode ASTM D-4294). Ces contraintes se traduisent par un besoin de nouvelles unités de raffinage ou bien par une forte augmentation de l'activité à iso-volume des catalyseurs d'hydrotraitement. Ces nouvelles contraintes vont également entraîner un besoin accru en hydrogène dans la raffinerie, nécessaires aux réactions d'hydrodésulfuration, d'hydrodésazotation et d'hydrodéaromatisation. D'autre part, ces nouvelles normes sont également accompagnées de contraintes en terme de qualité produit. Ainsi, les gazoles doivent présenter un bon indice de cétane. Les réactions d'hydrotraitement des gazoles entraînent également l'hydrogénation de noyaux aromatiques contenus dans lesdites coupes gazoles, ce qui a pour conséquence d'améliorer l'indice de cétane de ladite coupe gazole finale.

L'augmentation des performances de l'hydrotraitement des coupes gazoles peut être en partie due au choix du procédé mais dans tous les cas, l'utilisation d'un système catalytique intrinsèquement plus actif est très souvent un facteur clé. Ainsi, de nouvelles techniques de préparation des catalyseurs d'hydrotraitement ont besoin d'être développées pour améliorer encore les performances de ces catalyseurs et satisfaire les législations à venir.

De façon générale, il est admis qu'un catalyseur d'hydrotraitement présentant un fort potentiel catalytique se caractérise par une fonction hydrogénante optimisée, c'est à dire une phase active parfaitement dispersée à la surface du support et présentant une teneur en métal élevée. Idéalement, quelle que soit la nature de la charge hydrocarbonée à traiter, le catalyseur doit pouvoir présenter une accessibilité des sites actifs vis-à-vis des réactifs et produits de réactions tout en développant une surface active élevée, ce qui conduit à des contraintes spécifiques en terme de structure et de texture propres au support oxyde constitutif desdits catalyseurs.

La composition et l'utilisation de catalyseurs classiques d'hydrotraitement de charges hydrocarbonées sont bien décrits dans l'ouvrage "Hydrocracking Science and Technology", 1996, J. Scherzer, A. J. Gruia, Marcel Dekker Inc et dans l'article de B. S. Clausen, H. T. Topsøe, F. E. Massoth, issu de l'ouvrage "Catalysis Science and Technology", 1996, volume 11, Springer-Verlag. Ainsi, ces catalyseurs se caractérisent généralement par la présence d'une phase active à base d'au moins un métal du groupe VIB et/ou au moins un métal du groupe VIII du tableau périodique des éléments. Les formulations les plus courantes sont de type cobalt-molybdène (CoMo), nickel-molybdène (NiMo) et nickel-tungstène (NiW). Ces catalyseurs peuvent se présenter sous forme massique ou bien à l'état supporté mettant alors en jeu un solide poreux de nature différente. Dans ce dernier cas, le support poreux est généralement un oxyde amorphe ou mal cristallisé tel que par exemple une alumine, ou un aluminosilicate, éventuellement associé à un matériau zéolithique ou non. Après préparation, le métal du groupe VIB et/ou le métal du groupe VIII constitutif(s) desdits catalyseurs se présente(nt) souvent sous forme d'oxyde. La forme active et stable desdits catalyseurs pour les procédés d'hydrotraitement étant la forme sulfurée, ces catalyseurs doivent subir une étape de sulfuration. Celle-ci peut être réalisée dans l'unité du procédé associé, on parle alors de sulfuration in-situ, ou préalablement au chargement du catalyseur dans l'unité, on parle alors de sulfuration ex-situ.

Les méthodes usuelles conduisant à la formation de la phase active des catalyseurs d'hydrotraitement consistent en un dépôt de précurseur(s) moléculaire(s) d'au moins un métal du groupe VIB et/ou au moins un métal du groupe VIII sur un support oxyde par la technique dite "d'imprégnation à sec" suivi des étapes de maturation, séchage et éventuellement calcination conduisant à la formation de la forme dite oxydée du(des)dit(s) métal(aux) employé(s). Vient ensuite l'étape finale de sulfuration génératrice de la phase active comme mentionné ci-dessus.

En particulier, le brevet US 7 790 652 décrit un nouveau support alumine présentant une distribution poreuse bien spécifique, pouvant être utilisé comme support de catalyseur dans un procédé d'hydroconversion de charges hydrocarbonées lourdes. Ledit support comprenant de l'alumine présente un diamètre moyen des pores compris entre 100 et 140 A, une distribution de taille dont la largeur est de moins de 33 Å, un volume poreux d'au moins 0,75 ml/g dans lequel moins de 5% du volume poreux dudit support est présent dans les pores ayant un diamètre supérieur à 210 Å.

Ledit support utilisé en combinaison avec une phase active hydrogénante permet d'obtenir des performances catalytiques inattendues dans le cas où il est utilisé en hydroconversion des charges lourdes ayant de préférence une majorité de ses composants bouillant à une température supérieure à 343°C. En particulier, le procédé d'hydroconversion de charges lourdes selon le brevet US 7 790 652 permet d'obtenir une conversion des composés hydrocarbonés bouillant à une température supérieure à 524°C fortement améliorée par rapport aux conversions obtenues avec des catalyseurs classiques de l'art antérieur.

Ledit support alumine est préparé selon une méthode comprenant une première étape de formation d'une dispersion d'alumine par le mélange, de manière contrôlée, d'une première solution aqueuse alcaline et d'une première solution aqueuse acide, au moins une desdites solutions acide et basiques, ou les deux comprenant un composé aluminique. Les solutions acide et basique sont mélangées dans des proportions telles que le pH de la dispersion résultante est compris entre 8 et 11. Les solutions acide et basique sont également mélangées dans des quantités permettant d'obtenir une dispersion contenant la quantité désirée d'alumine, en particulier, la première étape permet l'obtention de 25 à 35% poids d'alumine par rapport à la quantité totale d'alumine formée à l'issue des deux étapes de précipitation. La première étape opère à une température comprise entre 20 et 40°C. Quand la quantité d'alumine désirée est formée, la température de la suspension est augmentée à une température comprise entre 45 et 70°C, puis la suspension chauffée est ensuite soumise à une deuxième étape de précipitation par mise en contact de ladite suspension avec une seconde solution aqueuse alcaline et une seconde solution aqueuse acide, au moins l'une des deux solutions ou les deux comprenant un composé aluminique. De même, le pH est réglé entre 8 et 10,5 par les proportions des solutions acide et basique ajoutées et la quantité restante d'alumine a former dans la deuxième étape est apportée par les quantités des deuxièmes solutions acide et basique ajoutées. La deuxième étape opère à une température comprise entre 20 et 40°C. Le gel d'alumine ainsi formé comprend au moins 95% de boehmite. La dispersibilité du gel d'alumine ainsi obtenu n'est pas mentionnée. Le gel d'alumine est ensuite filtré, lavé et éventuellement séché selon les méthodes connues de l'homme du métier, sans étape de traitement thermique préalable, pour produire une poudre d'alumine qui est ensuite mise en forme selon les méthodes connues de l'homme du métier puis calciné pour produire le support alumine final.

La première étape de précipitation du procédé de préparation du brevet US 7 790 652 est limitée à une production d'alumine faible, comprise entre 25 et 35% poids, car une production d'alumine plus élevée à l'issue de la première étape ne permet pas une filtration optimale du gel obtenu. Par ailleurs, l'augmentation de la production d'alumine dans la première étape du brevet US 7 790 652 ne permettrait pas la mise en forme du gel ainsi obtenu. FR 2 972 648 divulgue un procédé d'hydrotraitement utilisant un catalyseur à base d'alumine. La demanderesse a donc mis en évidence qu'un catalyseur comprenant au moins un métal du groupe VIB et/ou au moins un métal du groupe VIII de la classification périodique et un support comprenant une alumine mésoporeuse amorphe présentant une distribution poreuse spécifique ainsi qu'une connectivité très élevée, présentait une activité catalytique améliorée par rapport à des catalyseurs classiques d'hydrotraitement des gazoles, ledit catalyseur étant sulfuré puis mis en oeuvre dans un procédé d'hydrotraitement d'au moins une coupe gazole selon l'invention.

En particulier, le procédé selon l'invention permet une meilleure activité en hydrodésulfuration c'est-à-dire une température de mise en oeuvre plus basse que les catalyseurs de l'art antérieur pour un niveau de soufre donné dans l'effluent.

En pratique, l'utilisation du catalyseur selon l'invention peut aussi permettre aux raffineurs de désulfurer une plus grande proportion de gazole issus des procédés de conversion (LCO pour light cycle oil selon la terminologie anglo-saxonne, coker...)

Un objectif de la présente invention est de fournir un procédé d'hydrotraitement d'au moins une coupe gazole mettant en oeuvre un catalyseur présentant des performances catalytiques améliorées, notamment en terme d'hydrodésulfuration et d'hydrodéazotation des coupes traitées.

Un autre objectif de la présente invention est de fournir un procédé d'hydrotraitement d'au moins une coupe gazole mettant en oeuvre un catalyseur présentant des performances catalytiques améliorées, ledit procédé permettant d'obtenir une activité hydrodésulfurante accrue.

**Résumé et intérêt de l'invention**

Un des avantages de la présente invention réside dans la mise en oeuvre, dans un procédé d'hydrotraitement d'au moins une coupe gazole, d'un catalyseur à base d'un support comprenant une alumine dont la porosité est très connectée, c'est-à-dire présentant un nombre de pores adjacents très important. Une connectivité élevée représente un avantage important pour la diffusion des molécules de la coupe gazole à traiter lors de la mise en oeuvre du procédé d'hydrotraitement selon l'invention utilisant ce matériau et lors de la préparation du catalyseur en particulier lors de l'imprégnation de solutions métalliques présentant des concentration en métaux élevées.

Un avantage de la présente invention est donc de fournir un procédé utilisant un catalyseur comprenant un support spécifique permettant l'obtention d'une activité améliorée en hydrodésulfuration par rapport aux catalyseurs de l'art antérieur. L'objet de l'invention est un procédé d'hydrotraitement d'au moins une coupe gazole ayant une température moyenne pondérée (TMP) comprise entre 240°C et 350°C, opérant à une température comprise entre 250°C et 400°C, à une pression totale comprise entre 2 MPa et 10 MPa avec un ratio volume d'hydrogène par volume de charge hydrocarbonée compris entre 100 et 800 litres par litre et à une Vitesse Volumique Horaire (VVH) définie par le rapport du débit volumique de charge hydrocarbonée liquide par le volume de catalyseur chargé dans le réacteur comprise entre 1 et 10 h-1, ledit procédé utilisant au moins un catalyseur comprenant au moins un métal du groupe VIB et/ou au moins un métal du groupe VIII de la classification périodique et un support comprenant une alumine mésoporeuse amorphe, ledit procédé comprenant les étapes suivantes de préparation de l'alumine:

a) au moins une première étape a) de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 40 et 100%, le taux d'avancement étant défini comme étant la proportion d'alumine formée en équivalent $Al_2O_3$ lors de ladite étape a) de précipitation par rapport à la quantité totale d'alumine formée à l'issue de la ou les étapes de précipitation et plus généralement à l'issue des étapes de préparation du gel d'alumine, ladite étape a) opérant à une température comprise entre 10 et 50 °C, et pendant une durée comprise entre 2 minutes et 30 minutes,

b) une étape de traitement thermique de la suspension obtenue à l'issue de l'étape a), à une température comprise entre 50 et 200°C pendant une durée comprise entre 30 minutes et 5 heures permettant l'obtention d'un gel d'alumine,

c) une étape de filtration de la suspension obtenue à l'issue de l'étape b) de traitement thermique, suivie d'au moins une étape de lavage du gel obtenu,

d) une étape de séchage du gel d'alumine obtenu à l'issue de l'étape c) pour obtenir une poudre,

e) une étape de mise en forme de la poudre obtenue à l'issue de l'étape d) pour obtenir le matériau cru,

f) une étape de traitement thermique du matériau cru obtenu à l'issue de l'étape e) à une température comprise entre 500 et 1000°C, en présence ou non d'un flux d'air contenant jusqu'à 60% en volume d'eau.

Un avantage de l'invention est de fournir un nouveau procédé d'hydrotraitement utilisant un catalyseur dont le support alumine est préparé selon un procédé de préparation bien spécifique, permettant la mise en forme d'un gel d'alumine très dispersible, lui-même préparé à partir d'une étape de précipitation dans laquelle au moins 40% poids d'alumine en équivalent $Al_2O_3$ par rapport à la quantité totale d'alumine formée à l'issue dudit procédé de préparation du gel, sont formés dès la première étape de précipitation. Ce procédé est réalisé grâce à la mise en oeuvre d'une étape de traitement thermique et en particulier une étape de murissement permettant l'obtention d'un gel d'alumine présentant une filtrabilité améliorée, et facilitant sa mise en forme.

Définitions et méthodes de mesure

Dans toute la suite du texte, l'indice de dispersibilité est défini comme le pourcentage en poids de gel d'alumine peptisée que l'on peut disperser par centrifugation dans un tube en polypropylène à 3600G pendant 10 min.
La dispersibilité est mesurée en dispersant 10% de boehmite ou gel d'alumine dans une suspension d'eau contenant également 10% d'acide nitrique par rapport à la masse de boehmite. Puis, on centrifuge la suspension à 3600G rpm pendant 10 min. Les sédiments recueillis sont séchés à 100°C une nuit puis pesés.

On obtient l'indice de dispersibilité, noté ID par le calcul suivant : ID(%)=100%-masse de sédiments séchés(%).

Dans toute la suite du texte, la connectivité de l'alumine utilisée comme support de catalyseur ou du catalyseur utilisé dans le procédé selon l'invention est définie comme étant le nombre de pores adjacents à un pore donné. La connectivité selon l'invention est déterminée à partir des isothermes d'adsorption/désorption d'azote, est représentative de la totalité de la porosité de l'alumine ou du catalyseur et en particulier de la totalité de la mésoporosité de l'alumine, c'est-à-dire de la totalité des pores ayant un diamètre moyen compris entre 2 et 50 nm.

La connectivité est une grandeur relative mesurée selon la procédure décrite dans la publication de Seaton (Liu H., Zhang L., Seaton N.A., Chemical Engineering Science, 47, 17-18, pp.4393-4404, 1992). Il s'agit d'une simulation Monte-Carlo à partir des isothermes d'adsorption/désorption d'azote. Ces paramètres de connectivité sont basés sur la théorie de la percolation. La connectivité est relié aux nombres de pores adjacents et une connectivité élevée représente un avantage pour la diffusion lors des réactions catalytiques des molécules à traiter.

L'alumine et le catalyseur utilisés dans le procédé selon la présente invention présente en outre une distribution poreuse spécifique, dans lesquels les volumes macroporeux et mésoporeux sont mesurés par intrusion de mercure et le volume microporeux est mesuré par adsorption d'azote.

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

Dans l'exposé qui suit de l'invention, la distribution poreuse mesurée par porosimétrie au mercure est déterminée par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage "Techniques de l'ingénieur, traité analyse et caractérisation, P 1050-5, écrits par Jean Charpin et Bernard Rasneur ».

On fixe à 0,2 MPa la valeur à partir de laquelle le mercure remplit tous les vides intergranulaires, et on considère qu'au-delà le mercure pénètre dans les pores de l'alumine.

Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Le volume macroporeux du catalyseur est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian des mésopores (Dp en nm) comme étant un diamètre tel que tous les pores de taille inférieure à ce diamètre constituent 50% du volume mésoporeux, mesuré par porosimétrie au mercure.

La distribution poreuse mesurée par adsorption d'azote a été déterminée par le modèle Barrett-Joyner-Halenda (BJH). L'isotherme d'adsorption - désorption d'azote selon le modèle BJH est décrit dans le périodique "The Journal of American Society" , 73, 373, (1951) écrit par E.P.Barrett, L.G.Joyner et P.P.Halenda. Dans l'exposé qui suit de l'invention, on entend par volume adsorption azote, le volume mesuré pour $P/P_0$= 0,99, pression pour laquelle il est admis que l'azote a rempli tous les pores.

Dans l'exposé qui suit de l'invention, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

## Description de l'invention

L'invention concerne un procédé d'hydrotraitement et en particulier d'hydrodésulfuration d'au moins une coupe gazole ayant une température moyenne pondérée (TMP) comprise entre 240°C et 350°C.

La TMP est définie à partir de la température à laquelle distillent 5%, 50% et 70% du volume de la charge selon la formule suivante : TMP = (T 5% + 2 x T 50% + 4 x T 70%)/ 7. La TMP est calculée à partir de valeurs de distillation simulée. La charge hydrocarbonée traitée a généralement un intervalle de distillation compris entre 150°C et 500°C, de préférence entre 180 et 450°C.

Dans la suite du texte, nous appellerons conventionnellement cette charge gazole, mais cette désignation n'a aucun caractère restrictif. Toute charge hydrocarbonée contenant du soufre et des composés azotés inhibiteurs de l'hydrotraitement, et une TMP similaire à celle d'une coupe gazole peut être concernée par le procédé objet de la présente invention. La charge hydrocarbonée peut être de nature chimique quelconque, c'est à dire posséder une répartition quelconque entre les différentes familles chimiques notamment les paraffines, oléfines, naphtènes et aromatiques.

Charges

La charge mise en oeuvre dans le procédé d'hydrotraitement selon l'invention est une coupe gazole contenant du soufre.

La teneur en soufre dans la charge est généralement inférieure à 5% poids, de manière préférée comprise entre 0,2 et 4% poids et de manière encore plus préférée entre 0,25 et 3 % poids.

La teneur en azote totale (neutre et basique) dans la charge est supérieure ou égale à 50 ppm, de préférence elle est comprise entre 200 et 6000 ppm poids, de manière plus préférée entre 300 et 4000 ppm poids et de manière encore plus préférée entre 400 et 4000 ppm. La teneur en azote basique présente au moins un tiers de la teneur en azote globale.

La teneur en azote basique est généralement supérieure ou égale à 10 ppm, de manière plus préférée entre 65 et 2000 ppm poids et de manière encore plus préférée entre 100 et 2000 ppm.

La charge traitée contient généralement très peu de résines, la teneur en résines est généralement inférieure à 1% pds.

Les coupes gazoles mises en oeuvre dans le procédé selon l'invention sont avantageusement choisies parmi les coupes gazoles issues de la distillation directe (ou gazole straight run selon la terminologie anglo-saxonne) seule ou en mélange avec au moins une coupe issue d'une unité de cokéfaction (coking selon la terminologie anglo-saxonne), ou au moins une coupe issue du craquage catalytique (Fluid Catalytic Cracking selon la terminologie anglo-saxonne) ou encore au moins une coupe gazole provenant d'autres procédés de conversion tels que l'hydrocraquage doux ou l'hydrotraitement des résidus. Les coupes gazoles mises en oeuvre dans le procédé selon l'invention sont des coupes dont au moins 90% des composés présentent avantageusement une température d'ébullition comprise entre 250°C et 400°C.

Conformément à l'invention, le procédé d'hydrotraitement ou d'hydrodésulfuration d'au moins une coupe gazole selon l'invention est mis en oeuvre à une température comprise entre 250°C et 400°C, de préférence entre 320°C et 380°C à une pression totale comprise entre 2 MPa et 10 MPa et de préférence entre 3 MPa et 9 MPa avec un ratio volume d'hydrogène par volume de charge hydrocarbonée compris entre 100 et 800 litres par litre et de préférence compris entre 200 et 400 litres par litre et à une Vitesse Volumique Horaire (WH) définie par le rapport du débit volumique de charge hydrocarbonée liquide par le volume de catalyseur chargé dans le réacteur comprise entre 1 et 10 h$^{-1}$, et de préférence entre 2 et 8 h$^{-1}$.

Conformément à l'invention, le catalyseur utilisé dans ledit procédé d'hydrotraitement ou d'hydrodésulfuration comprend au moins un métal du groupe VIB et/ou au moins un métal du groupe VIII de la classification périodique et un support comprenant et de préférence constitué d'une alumine mésoporeuse amorphe présentant une connectivité (Z) supérieure à 2,7, la connectivité de ladite alumine étant déterminée à partir des isothermes d'adsorption/désorption d'azote.

Le catalyseur utilisé dans la présente invention présente également une connectivité (Z), déterminée à partir des isothermes d'adsorption/désorption d'azote, avantageusement supérieure à 2,7 et de préférence comprise entre 2,7 et 10, de manière préférée comprise entre 2,8 et 10, de manière très préférée comprise entre 3 et 9, de manière plus préférée comprise entre 3 et 8 et de manière encore plus préférée comprise entre 3 et 7, la connectivité dudit catalyseur étant déterminé à partir des isothermes d'adsorption/désorption d'azote.

De préférence, les éléments du groupe VIII sont choisis parmi les métaux nobles et non nobles du groupe VIII et de préférence parmi le fer, le cobalt, le nickel, le ruthénium, le rhodium, le palladium, l'osmium, l'iridium ou le platine, pris seuls ou en mélange.

Dans le cas où les éléments du groupe VIII sont choisis parmi les métaux non nobles du groupe VIII, les éléments du groupe VIII sont avantageusement choisis parmi le cobalt, le nickel, le fer, et de manière préférée parmi le cobalt et le nickel, pris seuls ou en mélange.

De préférence, les éléments du groupe VIB sont choisis parmi le tungstène et le molybdène, pris seuls ou en mélange. Dans le cas où la fonction hydrogénante comprend un élément du groupe VIII et un élément du groupe VIB, les associations de métaux suivants sont préférées: nickel-molybdène, cobalt-molybdène, fer-molybdène, fer-tungstène, nickel-tungstène, cobalt-tungstène, et de manière très préférée: nickel-molybdène, cobalt-molybdène, nickel-tungstène. Il est également possible d'utiliser des associations de trois métaux tel que par exemple nickel-cobalt-molybdène. Lorsqu'une combinaison de métaux du groupe VI et du groupe VIII est utilisée, le catalyseur est alors préférentiellement utilisé sous une forme sulfurée.

Les teneurs en métaux à suivre sont exprimées sous leur forme équivalent oxyde dans le cas où le dosage se ferait pas Fluorescence des rayons X sur le solide qui aurait été calciné, bien que le catalyseur puisse être calciné ou non avant sulfuration.

Dans le cas où ledit catalyseur comprend au moins un métal du groupe VIB en combinaison avec au moins un métal non noble du groupe VIII, la teneur en métal du groupe VIB est avantageusement comprise entre 10 et 35% en poids d'oxyde par rapport à la masse totale dudit catalyseur, de manière préférée entre 15 et 30% en poids d'oxyde et de manière très préférée entre 18 et 25% en poids d'oxyde et la teneur en métal non noble du groupe VIII est avantageusement comprise entre 1 et 10% en poids d'oxyde par rapport à la masse totale dudit catalyseur, de manière préférée entre 1,5 et 8% en poids d'oxyde et de manière très préférée entre 2 et 6% en poids d'oxyde.

Le rapport molaire des métal(ux) du groupe VIII par rapport aux métal(ux) du groupe VIB dans le catalyseur oxyde est préférentiellement compris entre 0,1:1,0 et 0,8:1,0, très préférentiellement compris entre 0,2:1,0 et 0,6:1,0, et de manière encore plus préférée compris entre 0,3:1,0 et 0,5:1,0.

De manière avantageuse, le catalyseur utilisé dans le procédé selon l'invention peut contenir au moins un élément dopant choisi parmi le phosphore, le bore, le fluor ou le silicium, seul ou en mélange. De manière préférée le dopant est le phosphore ou le bore.

Lorsque le catalyseur contient du phosphore, la teneur en phosphore dans ledit catalyseur oxyde est de préférence comprise entre 0,5 et 15 % poids de $P_2O_5$, de manière plus préférée entre 1 et 10% poids de $P_2O_5$, de manière très préférée entre 2 et 8 % poids de $P_2O_5$. La teneur en phosphore est aussi avantageusement choisie de manière à ce que le rapport molaire du phosphore au molybdène soit compris entre 0,1:1,0 et 0,8:1,0 et de manière très préférée entre 0,2:1,0 et 0,6:1,0.

Lorsque le catalyseur contient du bore, la teneur en bore dans ledit catalyseur oxyde est de préférence comprise entre 0,2 et 8 % poids de $B_2O_3$, de manière plus préférée entre 0,5 et 5 % poids de $B_2O_3$, de manière très préférée entre 1 et 4 % poids de $B_2O_3$. La teneur en bore est aussi avantageusement choisie de manière à ce que le rapport molaire du bore au molybdène soit compris entre 0,1:1,0 et 0,8:1,0 et de manière très préférée entre 0,2:1,0 et 0,6:1,0.

Lorsque le catalyseur contient du silicium, la teneur en silicium dans ledit catalyseur oxyde est de préférence comprise entre 0,5 et 30 % poids de $SiO_2$, de manière plus préférée entre 3 et 10 % poids de $SiO_2$.

Lorsque le catalyseur contient du fluor, la teneur en fluor dans ledit catalyseur oxyde est de préférence comprise entre 0,5 et 5 % poids, de manière plus préférée entre 1 et 3 % poids. Le catalyseur utilisé dans le procédé selon l'invention comprend un support comprenant et est de préférence constituée par une alumine mésoporeuse amorphe, ladite alumine étant préparée selon l'invention. Le support du catalyseur utilisé dans la présente invention comprend et est de préférence constitué d'une alumine mésoporeuse amorphe présentant une connectivité (Z) comprise entre 2,7 et 10, de manière préférée comprise entre 2,8 et 10, de manière très préférée comprise entre 3 et 9, de manière plus préférée comprise entre 3 et 8 et de manière encore plus préférée comprise entre 3 et 7.

L'alumine utilisée comme support dans le catalyseur utilisé selon la présente invention est une alumine mésoporeuse à mésoporosité contrôlée présentant une bonne stabilité thermique et chimique, ayant une distribution en taille des mésopores centrée, uniforme et contrôlée.

Ladite alumine et le support comprenant ladite alumine présentent une surface spécifique et une distribution poreuse calibrés et adaptée à son utilisation dans un procédé d'hydrotraitement d'au moins une coupe gazole.

Ladite alumine utilisée comme support dans le catalyseur utilisé dans le procédé selon la présente invention et le support du catalyseur présentent avantageusement une distribution poreuse spécifique.

De préférence, l'alumine mésoporeuse est dépourvue de micropores.

De préférence, le support mésoporeux comprenant ladite alumine est dépourvu de micropores.

De préférence, ladite alumine et ledit support comprenant ladite alumine présentent la distribution poreuse suivante, mesurée par porosimètrie au mercure :

- le pourcentage de volume compris dans les pores de taille comprise entre 2 et 6 nm, par rapport au volume poreux total, est compris entre 1 et 25 %,

- le pourcentage de volume compris dans les pores de tailles supérieure à 6 nm et inférieure à 15 nm représente entre 60 et 95 % du volume poreux total,

- le pourcentage de volume compris dans les pores de taille comprise entre 15 et 50 nm représente 0 à 8 % du volume poreux total et,

- le pourcentage de volume compris dans les pores de taille comprise entre 50 et 7000 nm qui correspond au volume macroporeux représente 0 à 5 %, de préférence 0 à 2% du volume poreux total.

Le diamètre médian des mésopores (Dp en nm) mesuré par porosimétrie au mercure de ladite alumine et dudit support, déterminé en volume est avantageusement compris entre 7 et 12,5 nm.

De préférence, le volume poreux total de ladite alumine et dudit support mesuré par porosimétrie au mercure est compris entre 0,5 et 0,85 ml/g.

De préférence, le volume des mésopores de ladite alumine et dudit support, mesuré par porosimétrie au mercure, est compris entre 0,5 et 0,8 ml/g, de préférence, entre 0,55 et 0,75 et de manière très préférée, entre 0,60 et 0,75 ml/g.

De préférence, le volume des macropores de ladite alumine et dudit support, mesuré par porosimétrie au mercure, est compris entre 0 et 0,04 ml/g, de préférence entre 0 et 0,02 ml/g.

De préférence, l'alumine et ledit support présentent avantageusement une surface spécifique supérieure à 180 $m^2$/g, de préférence supérieur à 220 $m^2$/g.

De préférence, l'alumine utilisée dans l'invention et ledit support comprenant ladite alumine sont non mésostructurés.

Ladite alumine utilisée comme support du catalyseur utilisé dans le procédé selon la présente invention est préparée selon le procédé de préparation comprenant au moins les étapes suivantes :

a) au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent $Al_2O_3$ lors de ladite première étape de précipitation par rapport à la quantité totale d'alumine formée à l'issue de la ou les étapes de précipitation, ladite première étape de précipitation opérant à une température comprise entre 10 et 50 °C, et pendant une durée comprise entre 2 minutes et 30 minutes,
b) une étape de traitement thermique de la suspension chauffée à une température comprise entre 50 et 200°C pendant une durée comprise entre 30 minutes et 5 heures permettant l'obtention d'un gel d'alumine,
c) une étape de filtration de la suspension obtenue à l'issue de l'étape b) de traitement thermique, suivie d'au moins une étape de lavage du gel obtenu,
d) une étape de séchage du gel d'alumine obtenu à l'issue de l'étape c) pour obtenir une poudre,
e) une étape de mise en forme de la poudre obtenue à l'issue de l'étape d) pour obtenir le matériau cru,
f) une étape de traitement thermique du matériau cru obtenu à l'issue de l'étape e) à une température comprise entre 500 et 1000°C, en présence ou non d'au flux d'air contenant jusqu'à 60% en volume d'eau.

De manière générale, on entend par « taux d'avancement » de la n-ième étape de précipitation le pourcentage d'alumine formé en équivalent $Al_2O_3$ dans ladite n-ième étape, par rapport à la quantité totale d'alumine formée à l'issue de l'ensemble des étapes de précipitation et plus généralement à l'issue des étapes de préparation du gel d'alumine.

Dans le cas où le taux d'avancement de ladite étape a) de précipitation est de 100%, ladite étape a) de précipitation permet généralement l'obtention d'une suspension d'alumine ayant une concentration en $Al_2O_3$ comprise entre 20 et 100 g/L, de préférence entre 20 et 80 g/L, de manière préférée entre 20 et 50 g/L.

**Etape a) de précipitation**

Le mélange dans le milieu réactionnel aqueux d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, le ou les précurseur(s) basique(s) et acide(s) sont ajoutés dans ladite première étape de précipitation a) en solution aqueuse contenant le ou lesdits précurseurs.

De préférence, le ou les précurseur(s) basique(s) et acide(s) sont ajoutés dans ladite première étape de précipitation a) en solutions aqueuse.

De préférence, le milieu réactionnel aqueux est de l'eau.

De préférence, ladite étape a) opère sous agitation.

De préférence, ladite étape a) est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.

Conformément à l'invention, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.

Pour les autres précurseurs basique et acide, qu'ils contiennent de l'aluminium ou pas, les ratio massiques base/acide sont établis par une courbe de neutralisation de la base par l'acide. Une telle courbe est obtenue aisément par l'homme du métier.

De préférence, ladite étape a) de précipitation est réalisée à un pH compris entre 8,5 et 10 et de manière très préférée entre 8,7 et 9,9.

Les précurseurs acide et basique sont également mélangées dans des quantités permettant d'obtenir une suspension contenant la quantité désirée d'alumine, en fonction de la concentration finale en alumine à atteindre. En particulier, ladite étape a) permet l'obtention de 40 à 100% poids d'alumine en équivalent $Al_2O_3$ par rapport à la quantité totale d'alumine formée à l'issue de de la ou les étapes de précipitation et plus généralement à l'issue des étapes de préparation du gel d'alumine.

Conformément à l'invention, c'est le débit du ou des précurseurs acide et basique contenant de l'aluminium qui est réglé de manière à obtenir un taux d'avancement de la première étape compris entre 40 et 100%.

De préférence, le taux d'avancement de ladite étape de précipitation a) est compris entre 40 et 99%, de préférence entre 45 et 90 % et de manière préférée entre 50 à 85%.

Dans le cas où le taux d'avancement obtenu à l'issue de l'étape a) de précipitation est inférieur à 100%, une deuxième étape de précipitation est nécessaire de manière à augmenter la quantité d'alumine formée. Dans ce cas, le taux d'avancement étant défini comme étant la proportion d'alumine formée en équivalent $Al_2O_3$ lors de ladite étape a) de précipitation par rapport à la quantité totale d'alumine formée à l'issue des deux étapes de précipitation du procédé de préparation selon l'invention et plus généralement à l'issue des étapes de préparation du gel d'alumine.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajouté dans le milieu réactionnel et du taux d'avancement requis pour la ou les étapes de précipitation.

Les débits du ou des précurseurs acide et/ou basique contenant de l'aluminium dépendent de la dimension du réacteur utilisé et ainsi de la quantité d'eau ajoutée dans le milieu réactionnel.

De préférence, ladite étape a) de précipitation est réalisée à une température comprise entre 10 et 45°C, de manière préférée entre 15 et 45 °C, de manière plus préférée entre 20 et 45°C et de manière très préférée entre 20 et 40°C.

Il est important que ladite étape a) de précipitation opère à basse température. Dans le cas où ledit procédé de préparation selon l'invention comprend deux étapes de précipitation, l'étape a) de précipitation est avantageusement réalisée à une température inférieure à la température de la deuxième étape de précipitation.

De préférence, ladite étape a) de précipitation est réalisée pendant une durée comprise entre 5 et 20 minutes, et de manière préférée de 5 à 15 minutes.

**Etape b) de traitement thermique**

Conformément à l'invention, ledit procédé de préparation comprend une étape b) de traitement thermique de la suspension obtenue à l'issue de l'étape a) de précipitation, ladite étape de traitement thermique opérant à une température comprise entre 60 et 200°C pendant une durée comprise entre 30 minutes et 5 heures, pour obtenir le gel d'alumine.

De préférence, ladite étape b) de traitement thermique est une étape de mûrissement.

De préférence, ladite étape b) de traitement thermique opère à une température comprise entre 65 et 150°C, de préférence entre 65 et 130°C, de manière préférée entre 70 et 110°C, de manière très préférée entre 70 et 95°C.

De préférence, ladite étape b) de traitement thermique est mise en oeuvre pendant une durée comprise entre 40 minutes et 5 heures, de préférence entre 40 minutes et 3 heures et de manière préférée entre 45 minutes et 2 heures.

**Deuxième étape de précipitation optionnelle**

Selon un mode de réalisation préféré, dans le cas où le taux d'avancement obtenu à l'issue de l'étape a) de précipitation est inférieur à 100%, ledit procédé de préparation comprend de préférence, une deuxième étape de précipitation a') après la première étape de précipitation.

Ladite deuxième étape de précipitation permet d'augmenter la proportion d'alumine produite.

Ladite deuxième étape de précipitation a') est avantageusement mise en oeuvre entre ladite première étape de précipitation a) et l'étape b) de traitement thermique.

Dans le cas où une deuxième étape de précipitation est mise en oeuvre, une étape de chauffage de la suspension obtenue à l'issue de l'étape a) de précipitation est avantageusement mise en oeuvre entre les deux étapes de précipitation a) et a').

De préférence, ladite étape de chauffage de la suspension obtenue à l'issue de l'étape a), mise en oeuvre entre ladite étape a) et la deuxième étape de précipitation a') opère à une température comprise entre 20 et 90°C, de préférence entre 30 et 80°C, de manière préférée entre 30 et 70°C et de manière très préférée entre 40 et 65°C.

De préférence, ladite étape de chauffage est mise en oeuvre pendant une durée comprise entre 7 et 45 minutes et de préférence entre 7 et 35 minutes.

Ladite étape de chauffage est avantageusement mise en oeuvre selon toutes les méthodes de chauffage connues de l'homme du métier.

Selon ledit mode de réalisation préféré, ledit procédé de préparation comprend une deuxième étape de précipitation de la suspension obtenue à l'issue de l'étape de chauffage, ladite deuxième étape opérant par ajout dans ladite suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 0 et 60%, le taux d'avancement étant défini comme étant la proportion d'alumine formée en équivalent $Al_2O_3$ lors de ladite deuxième étape de précipitation par rapport à la quantité totale d'alumine formée à l'issue des deux étapes de précipitation, plus généralement à l'issue des étapes de préparation du gel d'alumine et de préférence à l'issue de l'étape a') du procédé de préparation selon l'invention, ladite étape opérant à une température comprise entre 40 et 90 °C, et pendant une durée comprise entre 2 minutes et 50 minutes.

De même que dans la première étape de précipitation a), l'ajout dans la suspension chauffée, d'au moins un précurseur basique et d'au moins un précurseur acide nécessite soit, qu'au moins le précurseur basique ou le précurseur acide comprenne de l'aluminium, soit que les deux précurseurs basique et acide comprennent de l'aluminium.

Les précurseurs basiques comprenant de l'aluminium sont l'aluminate de sodium et l'aluminate de potassium. Le précurseur basique préféré est l'aluminate de sodium.

Les précurseurs acides comprenant de l'aluminium sont le sulfate d'aluminium, le chlorure d'aluminium et le nitrate d'aluminium. Le précurseur acide préféré est le sulfate d'aluminium.

De préférence, le ou les précurseur(s) basique(s) et acide(s) sont ajoutés dans ladite deuxième étape de précipitation a') en solutions aqueuse.

De préférence, ladite deuxième étape de précipitation opère sous agitation.

De préférence, ladite deuxième étape est réalisée en l'absence d'additif organique.

Les précurseurs acide et basique, qu'ils contiennent de l'aluminium ou pas, sont mélangées, de préférence en solution, dans le milieux réactionnel aqueux, dans des proportions telles que le pH de la suspension résultante est compris entre 8,5 et 10,5.

De même que dans l'étape a) de précipitation, c'est le débit relatif des précurseurs acide et basique qu'ils contiennent de l'aluminium ou pas, qui est choisi de manière à obtenir un pH du milieu réactionnel compris entre 8,5 et 10,5.

Dans le cas préféré où les précurseurs basique et acide sont respectivement l'aluminate de sodium et le sulfate d'aluminium, le ratio massique dudit précurseur basique sur ledit précurseur acide est avantageusement compris entre 1,6 et 2,05.

Pour les autres précurseurs basique et acide, qu'ils contiennent de l'aluminium ou pas, les ratio massique base/acide sont établis par une courbe de neutralisation de la base par l'acide. Une telle courbe est obtenue aisément par l'homme du métier.

De préférence, ladite deuxième étape de précipitation est réalisée à un pH compris entre 8,5 et 10 et de manière préférée entre 8,7 et 9,9.

Les précurseurs acide et basique sont également mélangés dans des quantités permettant d'obtenir une suspension contenant la quantité désirée d'alumine, en fonction de la concentration finale en alumine à atteindre. En particulier, ladite deuxième étape de précipitation permet l'obtention de 0 à 60% poids d'alumine en équivalent $Al_2O_3$

par rapport à la quantité totale d'alumine formée à l'issue des deux étapes de précipitation.

De même que dans l'étape a) de précipitation, c'est le débit du ou des précurseurs acide et basique contenant de l'aluminium qui est réglé de manière à obtenir un taux d'avancement de la deuxième étape compris entre 0 et 60%.

De préférence, le taux d'avancement de ladite étape de précipitation a) est compris entre 10 et 55 % et de préférence entre 15 à 55%.

Ainsi, en fonction de la concentration en alumine visée à l'issue de la ou des étapes de précipitation, de préférence comprise entre 20 et 100 g/l, les quantités d'aluminium devant être apportées par les précurseurs acide et/ou basique sont calculées et le débit des précurseurs est réglé en fonction de la concentration desdits précurseurs en aluminium ajoutés, de la quantité d'eau ajoutée dans le milieu réactionnel et du taux d'avancement requis pour chacune des étapes de précipitation.

De même que dans l'étape a) de précipitation, les débit du ou des précurseurs acide et/ou basique contenant de l'aluminium dépendant de la dimension du réacteur utilisé et ainsi de la quantité d'eau ajoutée dans le milieu réactionnel.

A titre d'exemple, si on travaille dans un réacteur de 3l et que l'on vise 1l de suspension d'alumine de concentration finale en $Al_2O_3$ de 50 g/l, le taux d'avancement ciblé est de 50% en équivalent $Al_2O_3$ pour la première étape de précipitation. Ainsi, 50% de l'alumine totale doit être apportée lors de l'étape a) de précipitation. Les précurseurs d'alumines sont l'aluminate de sodium à une concentration de 155 g/l en $Al_2O_3$ et le sulfate d'aluminium à une concentration de 102 g/l en $Al_2O_3$. Le pH de précipitation de la première étape est fixée à 9,5 et la deuxième à 9. La quantité d'eau ajoutée dans le réacteur est de 622 ml.

Pour la première étape a) de précipitation opérant à 30°C et pendant 8 minutes, le débit de sulfate d'aluminium doit être de 10,5 ml/min et le débit d'aluminate de sodium est de 13,2 ml/min. Le ratio massique d'aluminate de sodium sur sulfate d'aluminium est donc de 1,91.

Pour la deuxième étape de précipitation, opérant à 70°C, pendant 30 minutes, le débit de sulfate d'aluminium doit être de 2,9 ml/min et le débit d'aluminate de sodium est de 3,5 ml/min. Le ratio massique d'aluminate de sodium sur sulfate d'aluminium est donc de 1,84.

De préférence, la deuxième étape de précipitation est réalisée à une température compris entre 40 et 80 °C, de manière préférée entre 45 et 70°C et de manière très préférée entre 50 et 70°C.

De préférence, la deuxième étape de précipitation est réalisée pendant une durée comprise entre 5 et 45 minutes, et de manière préférée de 7 à 40 minutes.

La deuxième étape de précipitation permet généralement l'obtention d'une suspension d'alumine ayant une concentration en $Al_2O_3$ comprise entre 20 et 100 g/l, de préférence entre 20 et 80 g/l, de manière préférée entre 20 et 50 g/l.

Dans le cas où ladite deuxième étape de précipitation est mise en oeuvre, ledit procédé de préparation comprend également avantageusement une deuxième étape de chauffage de la suspension obtenue à l'issue de ladite deuxième étape de précipitation à une température comprise entre 50 et 95°C et de préférence entre 60 et 90°C.

De préférence, ladite deuxième étape de chauffage est mise en oeuvre pendant une durée comprise entre 7 et 45 minutes.

Ladite deuxième étape de chauffage est avantageusement mise en oeuvre selon toutes les méthodes de chauffage connues de l'homme du métier.

Ladite deuxième étape de chauffage permet d'augmenter la température du milieu réactionnel avant de soumettre la suspension obtenue à l'étape b) de traitement thermique.

**Etape c) de filtration**

Conformément à l'invention, le procédé de préparation d'alumine selon l'invention comprend également une étape c) de filtration de la suspension obtenue à l'issue de l'étape b) de traitement thermique, suivie d'au moins une étape de lavage du gel obtenu. Ladite étape de filtration est réalisée selon les méthodes connues de l'homme du métier.

La filtrabilité de la suspension obtenue à l'issue de l'étape a) de précipitation ou des deux étapes de précipitation est améliorée par la présence de ladite étape b) de traitement thermique finale de la suspension obtenue, ladite étape de traitement thermique favorisant la productivité du procédé de préparation ainsi qu'une extrapolation du procédé au niveau industriel.

Ladite étape de filtration est avantageusement suivie d'au moins une étape de lavage à l'eau et de préférence d'une à trois étapes de lavage, avec une quantité d'eau égale à la quantité de précipité filtré.

L'enchainement des étapes a) b) et c) et éventuellement de la deuxième étape de précipitation, de la deuxième étape de chauffage et de l'étape de filtration optionnelle, permet l'obtention d'un gel d'alumine spécifique présentant un indice de dispersibilité supérieur à 70%, une taille de cristallite comprise entre 1 à 35 nm, ainsi qu'une teneur en soufre comprise entre 0,001% et 2% poids et une teneur en sodium comprise entre 0,001% et 2 % poids, les pourcentages poids étant exprimés par rapport à la masse totale de gel d'alumine.

Le gel d'alumine ainsi obtenu, aussi appelé boehmite, présente un indice de dispersibilité compris entre 70 et 100%, de manière préférée entre 80 et 100%, de manière très préférée entre 85 et 100% et de manière encore plus préférée entre 90 et 100%.

De préférence, le gel d'alumine ainsi obtenu présente une taille de cristallites comprise entre 2 à 35 nm.

De préférence, le gel d'alumine ainsi obtenu comprend une teneur en soufre comprise entre 0,001 % et 1% poids, e manière préférée entre 0,001 et 0,40% poids, de manière très préférée entre 0,003 et 0,33 % poids, et de manière plus préférée entre 0,005 et 0,25 % poids.

De préférence, le gel d'alumine ainsi obtenu comprend une teneur en sodium comprise entre 0,001 % et 1% poids, de manière préférée entre 0,001 et 0,15 % poids, de manière très préférée entre 0,0015 et 0,10% poids, et 0,002 et 0,040 % poids.

En particulier, le gel d'alumine ou la boehmite sous forme de poudre selon l'invention est composée de cristallites dont la taille, obtenue par la formule de Scherrer en diffraction des rayons X selon les directions cristallographiques (020) et (120) sont respectivement comprise entre 2 et 20 nm et entre 2 et 35 nm.

De préférence, le gel d'alumine selon l'invention présente une taille de cristallites selon la direction cristallographique (020) comprise entre 2 à 15 nm et une taille de cristallite selon la direction cristallographique (120) comprise entre 2 à 35 nm.

La diffraction des rayons X sur les gels d'alumine ou boehmites a été effectuée en utilisant la méthode classique des poudres au moyen d'un diffractomètre.

La formule de Scherrer est une formule utilisée en diffraction des rayons X sur des poudres ou échantillons polycristallins qui relie la largeur à mi-hauteur des pics de diffraction à la taille des cristallites. Elle est décrite en détail dans la référence : Appl. Cryst. (1978). 11, 102-113 Scherrer after sixty years: A survey and some new results in the determination of crystallite size, J. I. Langford and A. J. C. Wilson.

Le gel d'alumine ainsi préparé et présentant un taux de dispersibilité élevé permet de faciliter l'étape de mise en forme dudit gel selon toutes les méthodes connues de l'homme du métier et en particulier par malaxage extrusion, par granulation et par la technique dite de l'oil drop selon la terminologie anglo-saxonne.

### Etape d) de séchage

Conformément à l'invention, le gel d'alumine obtenu à l'issue de l'étape c) de filtration, est séché dans une étape d) de séchage pour obtenir une poudre.

Ladite étape de séchage est avantageusement mise en oeuvre à une température comprise entre 20 et 50°C et pendant une durée comprise entre 1 jour et 3 semaines ou par atomisation.

Dans le cas où ladite étape d) de séchage est mise en oeuvre à une température comprise entre 20 et 50°C et pendant une durée comprise entre 1 jour et 3 semaines, ladite étape d) de séchage peut avantageusement être réalisée en étuve fermée et ventilée, de préférence ladite étape de séchage opère à une température comprise entre 25 et 40°C, et pendant une durée comprise entre 3 jours et deux semaines.

Dans le cas où ladite étape d) de séchage est mise en oeuvre par atomisation, le gâteau obtenu à l'issue de l'étape de traitement thermique éventuellement suivie d'un étape de filtration est remis en suspension. Ladite suspension est ensuite pulvérisée en fines gouttelettes, dans une enceinte cylindrique verticale au contact d'un courant d'air chaud afin d'évaporer l'eau selon le principe bien connu de l'homme du métier. La poudre obtenue est entraînée par le flux de chaleur jusqu'à un cyclone ou un filtre à manche qui vont séparer l'air de la poudre. De préférence, dans le cas où ladite étape d) de séchage est mise en oeuvre par atomisation, l'atomisation est réalisée selon le protocole opératoire décrit dans la publication Asep Bayu Dani Nandiyanto, Kikuo Okuyama, Advanced Powder Technology, 22, 1-19, 2011.

### Etape e) de mise en forme

Conformément à l'invention, la poudre obtenue à l'issue de l'étape d) de séchage est mise en forme dans une étape e) pour obtenir un matériau cru.

On entend par matériau cru, le matériau mis en forme et n'ayant pas subi d'étapes de traitement thermique.

De préférence, ladite étape e) de mise en forme est réalisée par malaxage extrusion, par pastillage, par la méthode de la coagulation en goutte (oil-drop), par granulation au plateau tournant ou par toute autre méthode bien connue de l'homme du métier.

De manière très préférée, ladite étape e) de mise en forme est réalisée par malaxage extrusion.

### Etape f de traitement thermique

Conformément à l'invention, la matériau cru obtenu à l'issue de l'étape e) de mise en forme subit ensuite une étape f) de traitement thermique à une température comprise entre 500 et 1000°C, pendant une durée comprise entre 2 et 10 h, en présence ou non d'au flux d'air contenant jusqu'à 60% volume d'eau.

De préférence, ladite étape f) de traitement thermique opère à une température comprise entre 540°C et 850°C.

De préférence, ladite étape f) de traitement thermique opère pendant une durée comprise entre 2h et 10h.

Ladite étape f) de traitement thermique permet la transition de la boehmite vers l'alumine finale.

Le procédé de préparation de l'alumine utilisé comme support du catalyseur mis en oeuvre dans le procédé selon l'invention permet l'obtention d'une alumine mésoporeuse amorphe présentant une connectivité supérieure à 2,7 et une mésoporosité contrôlée, ladite alumine présentant une bonne stabilité thermique et chimique, ayant une distribution en taille des mésopores centrée, uniforme et contrôlée, et une surface spécifique et un volume poreux et en particulier mésoporeux calibrés et présente la distribution poreuse spécifique telle que décrite ci-dessous.

Le catalyseur utilisé dans le procédé d'hydrotraitement selon l'invention est ensuite avantageusement obtenu par ajout des éléments constituant la phase active.

Le catalyseur selon l'invention peut être préparé au moyen de toute technique connue de l'homme du métier, et notamment par imprégnation des éléments des groupes VIII et/ou VIB sur le support sélectionné. L'ajout de dopant tel que le phosphore peut se faire en même temps que l'ajout des sels métalliques. Cette imprégnation peut par exemple être réalisée selon le mode connu de l'homme du métier sous la terminologie d'imprégnation à sec, dans lequel on introduit juste la quantité d'éléments désirés sous forme de sels solubles dans le solvant choisi, par exemple de l'eau déminéralisée, de façon à remplir aussi exactement que possible la porosité du support. L'imprégnation peut aussi être conduite en excès si l'Homme du métier le juge nécessaire. Le support ainsi rempli par la solution selon l'une ou l'autre des méthodes précitées est de préférence séché. Cette étape est préférentiellement précédée d'une étape de maturation dont la durée sera inférieure à 72 heures et de préférence comprise entre 0 et 24 heures, de manière très préférée entre 1 et 12 heures. L'étape de séchage qui suit est préférentiellement réalisée sous air ou sous inerte à une température comprise entre 50 et 200°C, très préférentiellement comprise entre 65 et 180°C et de manière encore plus préférée entre 75 et 160°C. Ladite étape de séchage est éventuellement suivie d'une étape de calcination, généralement comprise entre 200°C et 550°C, de préférence entre 300°C et 500°C. La calcination est alors conduite en présence d'air ou d'un gaz inerte.

Dans certains cas, il peut être avantageux de réaliser l'imprégnation en au moins deux étapes. Lorsque cette solution est préférée, des étapes de maturation et séchage, voire calcination intermédiaires restent possibles.

Les précurseurs du(es) métal(ux) du groupe VIII sont avantageusement choisis parmi les oxydes, citrates, oxalates, carbonates, hydroxycarbonates, hydroxydes, phosphates, sulfates, aluminates, molybdates, tungstates, nitrates, halogénures, par exemple, chlorures, fluorures, bromures, acétates, ou tout mélange des composés énoncés ici. L'hydroxycarbonate de nickel, le nitrate de cobalt ou de nickel, le carbonate de cobalt ou l'hydroxyde de cobalt ou de nickel sont utilisés de manière préférée.

Les précurseurs de molybdène utilisés sont bien connus de l'homme du métier. Par exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique ($H_3PMo_{12}O_{40}$) et leurs sels, et éventuellement l'acide silicomolybdique ($H_4SiMo_{12}O_{40}$) et les sels correspondants. Les sources de molybdène peuvent également être tout hétéropolycomposé de type Keggin, Keggin lacunaire, Keggin substitué, Dawson, Anderson, Strandberg, par exemple. On utilise de préférence le trioxyde de molybdène et les hétéropolyanions de type Strandberg, Keggin, Keggin lacunaire ou Keggin substitué connus de l'Homme du métier. Les précurseurs de tungstène utilisés sont bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique ($H_3PWo_{12}O_{40}$) et leurs sels, et éventuellement l'acide silicotungstique ($H_4SiW_{12}O_{40}$) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué connus de l'Homme du métier.

Un agent chélatant de nature organique peut avantageusement être introduit dans la(es) solution(s) métalliques qui sont utilisées si l'Homme du métier le juge nécessaire.

Que le catalyseur subisse une étape de calcination ou non, il peut ensuite être imprégnée par un ou plusieurs agents organiques pris seul ou en mélange dans un solvant de nature organique ou aqueuse. Dans ce cas, l'Homme du métier s'appuiera sur la littérature abondante qu'il existe.

Ledit catalyseur ainsi obtenu et utilisé dans le procédé selon la présente invention présente avantageusement la distribution poreuse suivante déterminé par porosimètre au mercure:

- le pourcentage de volume compris dans les pores de taille comprise entre 2 et 6 nm, par rapport au volume poreux total est compris entre 1 et 25 %,

- le pourcentage de volume compris dans les pores de tailles supérieure à 6 nm et inférieure à 15 nm représente entre 60 et 95 % du volume poreux total,

- le pourcentage de volume compris dans les pores de taille comprise entre 15 et 50 nm représente 0 à 15 % du volume poreux total et,

- le pourcentage de volume compris dans les pores de taille comprise entre 50 et 7000 nm qui correspond au volume macroporeux représente 0 à 5 % du volume poreux total et est de préférence compris entre 0 et 3%.

Enfin le diamètre médian des mésopores dudit catalyseur déterminé en volume (Dp en nm) mesuré par porosimétrie au mercure est avantageusement compris entre 8 et 14 nm.

Le catalyseur présente également avantageusement une surface spécifique supérieure à 130 m$^2$/g, de préférence supérieure à 150 m$^2$/g.

De préférence, ledit catalyseur présente également un volume poreux total mesuré par porosimétrie au mercure supérieur ou égal à 0,35 ml/g, de préférence supérieur ou égal à 0,40 ml/g.

De préférence, le catalyseur utilisé dans la présente invention présente une connectivité (Z) comprise entre 2,7 et 10, de manière préférée comprise entre 2,8 et 10, de manière très préférée comprise entre 3 et 9, de manière plus préférée comprise entre 3 et 8 et de manière encore plus préférée comprise entre 3 et 7.

Le procédé de préparation du catalyseur selon l'invention comprend avantageusement au moins une étape de sulfuration de sorte que la phase active du catalyseur se présente sous forme sulfure en vue de la mise en oeuvre dudit catalyseur dans un procédé d'hydrotraitement tel que décrit dans la présente description. Ce traitement d'activation par sulfuration est bien connu de l'Homme du métier et peut être effectué par toute méthode connue de l'Homme du métier. Ladite étape de sulfuration est réalisée par la mise en contact dudit catalyseur utilisé dans le procédé selon l'invention avec au moins un composé organique soufré décomposable et générateur d'H$_2$S ou par la mise en contact direct dudit catalyseur avec un flux gazeux d'H$_2$S, par exemple dilué dans l'hydrogène. Ledit composé organique soufré est avantageusement choisi parmi les alkyldisulfures tels que le disulfure de diméthyle (DMDS), les alkylsulfures tel que le sulfure de diméthyle, les mercaptans tel que le n-butylmercaptan, les composés polysulfures de type tertiononylpolysulfure tels que le TPS-37 ou le TPS-54 commercialisés par la société ARKEMA, ou tout autre composé connu de l'homme du métier permettant d'obtenir une bonne sulfuration du catalyseur. Ladite étape de sulfuration peut être réalisée *in situ* (c'est-à-dire après chargement du catalyseur dans l'unité réactionnelle du procédé d'hydrotraitement selon l'invention) ou *ex situ* (c'est-à-dire avant chargement du catalyseur dans l'unité réactionnelle du procédé d'hydrotraitement selon l'invention) à une température comprise entre 200 et 600°C et plus préférentiellement entre 300 et 500°C. Lorsque la sulfuration est réalisée de manière *ex situ,* il sera possible d'introduire un additif organique ou un solvant ou tout mélange de ceux-ci. Cette alternative pourra soit conduire à une meilleure activité, soit faciliter le chargement et la mise en oeuvre du catalyseur.

L'invention est illustrée par les exemples suivants qui ne présentent, en aucun cas, un caractère limitatif.

**Exemples:**

Exemple 1 (comparatif) : Préparation d'un support AL-1 (non-conforme) selon le brevet US7790562.

On réalise dans un premier temps la synthèse d'un gel d'alumine non-conforme en ce que l'exemple 1 est réalisé selon le procédé de préparation décrit dans le brevet US7790562. En particulier, le procédé de préparation du gel d'alumine selon l'exemple 1 ne comprend pas d'étape de traitement thermique de la suspension obtenue à l'issue des étapes de précipitation et en ce que la première étape de précipitation a) ne produit pas une quantité d'alumine supérieure à 40% en équivalent Al$_2$O$_3$ par rapport à la quantité totale d'alumine formée à l'issue de la deuxième étape de précipitation.

La synthèse est réalisée dans un réacteur de 7L et une suspension finale de 5L en 2 étapes de précipitation. La quantité d'eau ajoutée dans le réacteur est de 3868 ml.

La concentration finale en alumine visée est de 30g/L.

Une première étape de co-précipitation de sulfate d'aluminium Al$_2$(SO$_4$) et d'aluminate de sodium NaAlOO est réalisée à 30°C et pH=9,3 pendant une durée de 8 minutes. Les concentrations des précurseurs d'aluminium utilisées sont les suivantes : Al$_2$(SO$_4$)= à 102g/L en Al$_2$O$_3$ et NaAlOO à 155g/L en Al$_2$O$_3$. L'agitation est de 350 rpm tout au long de la synthèse.

Une solution de sulfate d'aluminium Al$_2$(SO$_4$) est ajoutée en continu pendant 8 minutes à un débit de 19,6 ml/min à une solution d'aluminate de sodium NaAlOO selon un ratio massique base/acide = 1,80 de manière à ajuster le pH à une valeur de 9,3. La température du milieu réactionnel est maintenu à 30°C.

Une suspension contenant un précipité d'alumine est obtenue.

La concentration finale en alumine visée étant de 30g/L, le débit des précurseurs sulfate d'aluminium Al$_2$(SO$_4$) et aluminate de sodium NaAlOO contenant de l'aluminium introduit dans la première étape de précipitations sont respectivement de 19,6 ml/min et de 23,3 ml/min.

Ces débits de précurseurs acide et basique contenant de l'aluminium permettent d'obtenir à l'issue de la première étape de précipitation un taux d'avancement de 30%.

La suspension obtenue est ensuite soumise à une montée en température de 30 à 57°C.

Une deuxième étape de co-précipitation de la suspension obtenue est ensuite réalisée par ajout de sulfate d'aluminium $Al_2(SO_4)$ à une concentration de 102 g/L en $Al_2O_3$ et d'aluminate de sodium NaAlOO à une concentration de 155 g/L en $Al_2O_3$. Une solution de sulfate d'aluminium $Al_2(SO_4)$ est donc ajoutée en continu à la suspension chauffée obtenue à l'issue de la première étape de précipitation pendant 30 minutes à un débit de 12,8 ml/min à une solution d'aluminate de sodium NaAlOO selon un ratio massique base/acide = 1,68 de manière à ajuster le pH à une valeur de 8,7. La température du milieu réactionnel dans la deuxième étape est maintenu à 57°C.

Une suspension contenant un précipité d'alumine est obtenue.

La concentration finale en alumine visée étant de 30g/L, le débit des précurseurs sulfate d'aluminium $Al_2(SO_4)$ et aluminate de sodium NaAlOO contenant de l'aluminium introduit dans la deuxième étape de précipitations sont respectivement de 12,8 ml/min et 14,1 ml/min.

Ces débits de précurseurs acide et basique contenant de l'aluminium permettent d'obtenir à l'issue de la deuxième étape de précipitation un taux d'avancement de 70%.

La suspension ainsi obtenue ne subit pas d'étape de traitement thermique.

La suspension obtenue est ensuite filtrée par déplacement d'eau sur un outil type Buchner fritté et le gel d'alumine obtenu est lavé 3 fois avec 5 L d'eau distillée à 70°C. Le temps de filtration ainsi que les lavages est de 4 h.

Les caractéristiques du gel d'alumine ainsi obtenu sont résumés dans le tableau 1.

Tableau 1 : Caractéristiques du gel d'alumine obtenu selon l'exemple 1.

| Indice de dispersibilité Ta=10% (%) | 60 |
|---|---|
| Taille (020) (nm) | 2,9 |
| Taille (120) (nm) | 4,1 |
| Sodium Na (ppm) | 0,011 |
| Soufre S (ppm) | 0,057 |
| Temps de filtration | 4 h |

Le gel d'alumine est ensuite séché par atomisation avec une température d'entrée de 250°C et de sortie de 130°C.

Le gel d'alumine séché est introduit dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 5 minutes pendant un malaxage à 20 tours/min. Le malaxage acide est poursuivi pendant 15 minutes. Une étape de neutralisation est ensuite réalisée par ajout d'une solution ammoniacale dans le malaxeur, à un taux de neutralisation de 50%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobées. Les extrudés obtenus sont séchés à 100°C pendant une nuit puis calciné pendant 2 h à 600°C.

Les caractéristiques de l'alumine formée sont reportées dans le tableau 2 :

Tableau 2 : Caractéristiques de l'alumine AL-1 obtenu selon l'exemple 1.

| | AL-1 |
|---|---|
| $S_{BET}$ (m$^2$/g) | 230 |
| $V_{Des°N2}$ (ml/g) | 0,91 |
| VPT (Hg) (ml/g) | 0,78 |
| Vmacro (Hg) (ml/g) | 0,01 |
| Vméso (Hg) (ml/g) | 0,81 |
| V (d<6nm) % | 43 |
| V (6<d<15nm) % | 55 |
| V (15<d<50nm) % | 1 |
| Z | 2,5 |
| Dp (Hg) (nm) | 11,5 |

Exemple 2 (selon l'invention) : Préparation des supports AL-2 et AL-3 (conformes).

On réalise dans un premier temps la synthèse de deux supports alumines AL-2 et AL-3 selon un procédé de préparation conforme à l'invention dans un réacteur de 7L et une suspension finale de 5L en 3 étapes, deux étapes de précipitation suivie d'une étape de murissement.

La concentration finale en alumine visée est de 45g/L. La quantité d'eau ajoutée dans le réacteur est de 3267 ml. L'agitation est de 350 rpm tout au long de la synthèse.

Une première étape de co-précipitation dans de l'eau, de sulfate d'aluminium $Al_2(SO_4)$ et d'aluminate de sodium NaAlOO est réalisée à 30°C et pH=9,5 pendant une durée de 8 minutes. Les concentrations des précurseurs d'aluminium utilisées sont les suivantes : $Al_2(SO_4)$= à 102g/L en $Al_2O_3$ et NaAlOO à 155g/L en $Al_2O_3$.

Une solution de sulfate d'aluminium $Al_2(SO_4)$ est ajoutée en continu pendant 8 minutes à un débit de 69,6 ml/min à une solution d'aluminate de sodium NaAlOO à un débit de 84,5 ml/min selon un ratio massique base/acide = 1,84 de manière à ajuster le pH à une valeur de 9,5. La température du milieu réactionnel est maintenu à 30°C.

Une suspension contenant un précipité d'alumine est obtenue.

La concentration finale en alumine visée étant de 45g/L, le débit des précurseurs sulfate d'aluminium $Al_2(SO_4)$ et aluminate de sodium NaAlOO contenant de l'aluminium introduit dans la première étape de précipitations sont respectivement de 69,6 ml/min et 84,5 ml/min.

Ces débits de précurseurs acide et basique contenant de l'aluminium permettent d'obtenir à l'issue de la première étape de précipitation un taux d'avancement de 72%.

La suspension obtenue est ensuite soumise à une montée en température de 30 à 68°C.

Une deuxième étape de co-précipitation de la suspension obtenue est ensuite réalisée par ajout de sulfate d'aluminium $Al_2(SO_4)$ à une concentration de 102g/L en $Al_2O_3$ et d'aluminate de sodium NaAlOO à une concentration de 155g/L en $Al_2O_3$. Une solution de sulfate d'aluminium $Al_2(SO_4)$ est donc ajoutée en continu à la suspension chauffée obtenue à l'issue de la première étape de précipitation pendant 30 minutes à un débit de 7,2 ml/min à une solution d'aluminate de sodium NaAlOO selon un ratio massique base/acide = 1,86 de manière à ajuster le pH à une valeur de 9. La température du milieu réactionnel dans la deuxième étape est maintenu à 68°C.

Une suspension contenant un précipité d'alumine est obtenue.

La concentration finale en alumine visée étant de 45g/L, le débit des précurseurs sulfate d'aluminium $Al_2(SO_4)$ et aluminate de sodium NaAlOO contenant de l'aluminium introduit dans la deuxième étape de précipitations sont respectivement de 7,2 ml/min et de 8,8 ml/min.

Ces débits de précurseurs acide et basique contenant de l'aluminium permettent d'obtenir à l'issue de la deuxième étape de précipitation un taux d'avancement de 28%.

La suspension obtenue est ensuite soumise à une montée en température de 68 à 90°C.

La suspension subit ensuite une étape de traitement thermique dans laquelle elle est maintenue à 90°C pendant 60 minutes.

La suspension obtenue est ensuite filtrée par déplacement d'eau sur un outil type Buchner fritté et le gel d'alumine obtenu est lavé 3 fois avec 5 L d'eau distillée. Le temps de filtration ainsi que les lavages est de 3h.

Les caractéristiques du gel d'alumine ainsi obtenu sont résumés dans le tableau 3.

Tableau 3 : Caractéristiques du gel d'alumine obtenu selon l'exemple 2.

| | |
|---|---|
| Indice de dispersibilité Ta=10% (%) | 100 |
| Taille (020) (nm) | 2,8 |
| Taille (120) (nm) | 3,5 |
| Sodium Na (%) | 0,074 |
| Soufre S (%) | 0,0364 |
| Temps de filtration | 3h |

Un gel présentant un indice de dispersibilité de 100% est ainsi obtenu.

Le gel d'alumine obtenu est ensuite séché par atomisation avec une température d'entrée de 250°C et de sortie de 130°C. Le gel séché par atomisation est appelé Gel n°1.

Le gel d'alumine obtenu selon l'exemple 2 a également été séché dans une étude ventilée à 35°C pendant 4 jours. Le gel séché en étuve est appelé Gel n°2.

Les gels d'alumine séchés n°1 et 2 sont ensuite respectivement introduits dans un malaxeur de type Brabender. De l'eau acidifiée avec de l'acide nitrique à un taux d'acide total de 3 %, exprimé en poids par rapport à la masse de gel séché introduit dans le malaxeur, est ajoutée en 5 minutes, pendant un malaxage à 20 tours/min. Le malaxage acide est poursuivi pendant 15 minutes. Une étape de neutralisation est ensuite réalisée par ajout d'une solution ammoniacale dans le malaxeur, à un taux de neutralisation de 50%, exprimé en poids d'ammoniaque par rapport à la quantité d'acide nitrique introduit dans le malaxeur pour l'étape d'acidification. Le malaxage est poursuivi pendant 3 minutes.

La pâte obtenue est ensuite extrudée à travers une filière de 2 mm trilobées. Les extrudés obtenus sont séchés à 100°C pendant une nuit puis calciné pendant 2 h à 600°C.

Les caractéristiques des alumines AL-2 et AL-3 formées sont reportées dans le tableau 4 :

Tableau 4 : Caractéristiques des alumines AL-2 et AL-3 obtenus selon l'exemple 2.

|  | AL-2 | AL-3 |
|---|---|---|
| Type de séchage | Atomisation | 35°C |
| $S_{BET}$ (m$^2$/g) | 289 | 292 |
| $V_{Des°N2}$ (ml/g) | 0,83 | 0,84 |
| VPT (Hg) (ml/g) | 0,68 | 0,69 |
| Vmacro (50-7000nm) (Hg) (ml/g) | 0,01 (2%) | 0,01 (2%) |
| Vméso (Hg) (ml/g) | 0,71 (99%) | 0,73 (99%) |
| V (d<6nm) % | 3 | 2 |
| V (6<d<15nm) % | 82 | 84 |
| V (15<d<50nm) % | 6 | 5 |
| Z | 6,5 | 6 |
| Dp à Vméso/2 (nm) (Hg) | 9,7 | 9,8 |

Exemple 3 : Préparation des catalyseurs C1 et C2 (non conformes), à partir de l'alumine AL-1 et des catalyseurs C3 et C4 (conformes) à partir respectivement des supports alumines AL-2, et AL-3.

Les catalyseurs C1 et C2 sont obtenu par imprégnation à sec du support d'alumine AL-1 sous forme d'extrudés, préparé selon l'exemple 1, par une solution d'imprégnation préparée par dissolution à chaud d'oxyde de molybdène et d'hydroxycarbonate de cobalt dans une solution d'acide phosphorique en solution aqueuse, le volume de ladite solution d'imprégnation étant rigoureusement égal au volume poreux de la masse de support d'alumine. Les concentrations en précurseurs dans la solution d'imprégnation sont ajustées de manière à déposer sur le support d'alumine les teneurs pondérales en Mo, Co et P souhaitées. Après l'étape d'imprégnation à sec, les extrudés sont laissés à maturer en atmosphère saturée en eau pendant 12 h, puis ils sont séchés une nuit à 90°C avant d'être calcinés à 450°C pendant 2 heures.

La composition finale du catalyseur C1 exprimée sous forme d'oxydes et déterminée par fluorescence des rayons X est alors la suivante : $MoO_3$ = 20,4 ± 0,2 (% en poids), CoO = 3,6 ± 0,1 (% en poids) et $P_2O_5$ = 5,9 ± 0,1 (% en poids), ce qui correspond à Co/Mo=0,34 mol/mol et P/Mo=0,59 mol/mol.

La composition finale du catalyseur C2 exprimée sous forme d'oxydes et déterminée par fluorescence des rayons X est alors la suivante : $MoO_3$ = 25,6 ± 0,2 (% en poids), CoO = 3,9 ± 0,1 (% en poids) et $P_2O_5$ = 2,8 ± 0,1 (% en poids), ce qui correspond à Co/Mo=0,29 mol/mol et P/Mo=0,22 mol/mol.

Pour les catalyseurs C1 et C2, le paramètre Z reste proche de celui de l'alumine AL-1 avec respectivement 2,4 et 2,3.

Le catalyseur C3 est préparé de manière analogue au catalyseur C1, mais à partir du support AL-2. Il conserve une valeur Z supérieure à celle du catalyseur C1 avec 6,4.

La composition finale du catalyseur C3 exprimée sous forme d'oxydes et déterminée par fluorescence des rayons X est alors la suivante : $MoO_3$ = 20,1 ± 0,2 (% en poids), CoO = 3,4 ± 0,1 (% en poids) et $P_2O_5$ = 6,0 ± 0,1 (% en poids), ce qui correspond à Co/Mo=0,33 mol/mol et P/Mo=0,60 mol/mol.

Le catalyseur C4 est préparé de manière analogue au catalyseur C1, mais à partir du support AL-3. Il conserve aussi une valeur Z supérieure à celle du catalyseur C2, avec 6,1.

La composition finale du catalyseur C4 exprimée sous forme d'oxydes est alors la suivante : $MoO_3$ = 25.1 ± 0,2 (% en poids), CoO = 3,6 ± 0,1 (% en poids) et $P_2O_5$ = 2,9 ± 0,1 (% en poids), ce qui correspond à Co/Mo=0,28 mol/mol et P/Mo=0,23 mol/mol.

Exemple 4 : Évaluation des performances catalytiques des catalyseurs C1 et C2 (non conforme et C3 et C4 (conformes) en test molécule modèle d'hydrogénation du toluène dans le cyclohexane sous pression et en présence d'$H_2S$.

Dans les applications telles que l'hydrotraitement où pour atteindre les cibles soufre en vigueur, il faut désulfurer majoritairement des composés réfractaires tels que le 4,6 DMDBT, la fonction hydro-déshydrogénante joue un rôle critique. Le test d'hydrogénation du toluène a donc été utilisé pour connaître l'intérêt de catalyseurs destinés à l'hydrotraitement de telles charges.

Les catalyseurs C1 à C4 précédemment décrits sont sulfurés *in situ* en dynamique dans un réacteur tubulaire à lit fixe traversé d'une unité pilote de type Microcat (constructeur : société Vinci), les fluides circulant de haut en bas. Les mesures d'activité hydrogénante sont effectuées immédiatement après la sulfuration sous pression et sans remise à l'air avec la charge d'hydrocarbures qui a servi à sulfurer les catalyseurs.

La charge de sulfuration et de test est composée de 5,88 % de diméthyldisulfure (DMDS), 20 % de toluène et 74,12 % de cyclohexane (en poids). Le DMDS permet par décomposition en méthane et en $H_2S$ de maintenir le catalyseur sous sa forme sulfurée.

La sulfuration est effectuée de température ambiante jusqu'à 350°C, avec une rampe de température de 2°C/min, une VVH = $4h^{-1}$ et $H_2/HC$ = 450 Nl/l. Le test catalytique est effectué à 350°C à VVH = $2h^{-1}$ et $H_2/HC$ équivalent à celui de la sulfuration, avec analyse en ligne sur au moins 4 prélèvements/effluents pour en déterminer la composition.

On mesure ainsi les activités catalytiques stabilisées de volumes égaux des catalyseurs dans la réaction d'hydrogénation du toluène.

Les conditions détaillées de mesure d'activité sont les suivantes :

- Pression totale : 6,0 MPa
- Pression de toluène : 0,37 MPa
- Pression de cyclohexane : 1,42 MPa
- Pression de méthane 0,22 MPa
- Pression d'hydrogène : 3,68 MPa
- Pression d'$H_2S$ : 0,22 MPa

On charge un volume de catalyseur égal à 4 $cm^3$ (extrudés de longueur comprise entre 2 et 4 mm) par pesée via la densité du lit catalytique.

La détermination des concentrations molaires en toluène non converti (T) et des concentrations en produits d'hydrogénation (le méthylcyclohexane (MCC6), l'éthylcyclopentane (EtCC5) et les diméthylcyclopentanes (DMCC5)) permettent de calculer un taux d'hydrogénation de toluène $X_{HYD}$ défini par :

$$X_{HYD}(\%) = 100 \times \frac{MCC6 + EtCC5 + DMCC5}{T + MCC6 + EtCC5 + DMCC5}$$

La réaction d'hydrogénation du toluène étant d'ordre 1 dans les conditions de test mises en oeuvre et le réacteur se comportant comme un réacteur piston idéal, on calcule l'activité hydrogénante AHYD des catalyseurs en appliquant la formule :

$$A_{HYD} = \ln\left(\frac{100}{100 - X_{HYD}}\right)$$

Le tableau 5 ci-dessous permet de comparer les activités hydrogénantes relatives des catalyseurs C1 à C4 en fonction de la phase active imprégnée et du paramètre de connectivité Z.

Tableau 5 : Activité relative par rapport au catalyseur C1 (non conforme) en hydrogénation du toluène des catalyseurs C3 et C4 (conformes) et du catalyseur C2 (non conforme)

| Catalyseur | | | | $A_{HYD}$ relative par rapport à C1 (%) |
|---|---|---|---|---|
| C1 (non conforme) | 20%$MoO_3$ | Z=2,4 | AL-1 | 100 |
| C3 (conforme) | 20%$MoO_3$ | Z=6,4 | AL-2 | 122 |
| C2 (non conforme) | 25%$MoO_3$ | Z=2,3 | AL-1 | 118 |
| C4 (conforme) | 25%$MoO_3$ | Z=6,1 | AL-3 | 153 |

Les résultats figurant dans le tableau 5 démontrent que les performances catalytiques, en terme d'activité hydrogénante, du catalyseur C3 préparé selon l'invention à partir du support AL-2 et dont le paramètre Z est donc de 6,4 sont significativement supérieures à celles du catalyseur C1 non conforme qui a lui été obtenu à partir du support AL-1 et qui présente donc un paramètre Z de 2,4.

Ce gain d'activité hydrogénante est particulièrement avantageux car il permet notamment d'atteindre un niveau d'activité proche de celui du catalyseur C2 non conforme, mais avec seulement 20 %MoO$_3$ contre 25%MoO$_3$ sur le catalyseur C2. D'ailleurs, à cette teneur en molybdène, le catalyseur C4 préparé selon l'invention à partir du support AL-3 dégage une activité hydrogénante encore plus élevée.

En l'absence de limitation diffusionnelle de la charge réactionnelle, le test s'effectuant en phase gaz, ce résultat démontre l'intérêt de l'imprégnation de la phase métallique sur un support à connectivité élevée. La qualité de la phase active déposée semble améliorée.

Exemple 5 : Évaluation des performances catalytiques des catalyseurs C1 et C2 (non conformes) et des catalyseurs C3 et C4 (conformes en hydrotraitement de gazole de distillation directe

En vue de leur évaluation en hydrodésulfuration (HDS) de gazole, les catalyseurs C1 à C4 subissent une étape de sulfuration in-situ dans un réacteur de type lit traversé (30 cm$^3$ de catalyseur sous forme d'extrudés mélangés avec 10 cm$^3$ de SiC de granulométrie 0,8 mm). La sulfuration est effectuée à 30 bar (3 MPa), à VVH = 2 h$^{-1}$, avec un rapport (de débit volumique) H$_2$/HC entrée = 250 Std I/I. La charge de sulfuration (gazole additivé de 2 % de DMDS Evolution® de la société Arkéma) est introduite dans le réacteur sous débit de H$_2$ dès lorsque celui-ci atteint 150°C. Après une heure à 150°C, la température est augmentée avec une rampe de 25°C/heure jusqu'à 220°C, puis avec une rampe de 12°C/heure jusqu'à atteindre un palier de 350°C, maintenu 12 heures.

Après sulfuration, la température est abaissée à 330°C et la charge de test est injectée (sans DMDS). Le test catalytique s'effectue à une pression totale de 3 MPa, à hydrogène perdu (sans recyclage), à WH = 2 h$^{-1}$, avec un rapport volumique H$_2$/HC en entrée de 250 Std I/I (débit H$_2$= 24 Std I.h$^{-1}$, débit charge = 60 cm$^3$.h$^{-1}$), et à trois températures différentes 330°C puis 340°C et 350 °C, en observant entre chaque point une durée suffisante pour que la teneur en soufre sois stabilisée.

Afin de pouvoir évaluer les performances des catalyseurs en HDS, et de s'affranchir de la présence d'H$_2$S dans les effluents, le pot contenant les effluents est strippé à l'azote à raison de 10 L.h$^{-1}$.

Le gazole utilisé ici est issu d'un brut Arabe lourd. Il contient 0,89 % poids de soufre, 150 ppm poids d'azote, une densité de 0,848 g/cm$^3$ et une température moyenne pondérée (TMP), définie à partir de la température à laquelle distillent 5%, 50% et 70% du volume de la charge selon la formule suivante : TMP = (T$_5$+2T$_{50}$+4T$_{95}$)/7, est de 324 °C.

Les performances catalytiques des catalyseurs sont données dans le tableau 6. Elles sont exprimées en activité relative, en posant que celle du catalyseur C1 est égale à 100 et en considérant qu'elles sont d'ordre apparent 1,25 par rapport au soufre (on indique une activité moyenne calculée aux trois points de température). Une autre manière de quantifier le gain est de relever la température pour laquelle, l'effluent contient 50 ppm de soufre. De la même manière le catalyseur C1 est placé comme base.

Tableau 6 : Activité relative (à iso-volume de catalyseur) en HDS de gazole de distillation directe des catalyseurs C1 à C4

| Catalyseur | | | | A$_{hds}$ relative par rapport à C1 (%) | T$_{50ppm}$ |
|---|---|---|---|---|---|
| C1 (non conforme) | 20%MoO$_3$ | Z=2,4 | AL-1 | 100 | Base |
| C3 (conforme) | 20%MoO$_3$ | Z=6,4 | AL-2 | 105 | Base - 2,3°C |
| C2 (non conforme) | 25%MoO$_3$ | Z=2,3 | AL-1 | 117 | Base - 5,1°C |
| C4 (conforme) | 25%MoO$_3$ | Z=6,1 | AL-3 | 127 | Base - 6,9°C |
| * une température plus faible indique un gain d'activité | | | | | |

Les résultats figurant dans le tableau 6 démontrent le gain d'activité important obtenu sur le catalyseur C3 préparé selon le procédé de l'invention en imprégnant un support présentant un paramètre Z élevé (6.4) par rapport au catalyseur C1 préparé avec un support dont le paramètre Z est faible (2.4).

L'effet est confirmé à teneur en métaux plus élevée (catalyseur C2 selon un procédé de l'art antérieur par rapport au catalyseur C4 préparé selon l'invention).

De manière plus globale, les résultats obtenus démontrent que le catalyseur préparé selon l'invention permet d'abaisser d'environ 2°C la température de fonctionnement de l'unité pour une même teneur en soufre dans l'effluent par rapport aux catalyseurs de l'art antérieur. Ce gain peut aussi permettre au raffineur de traiter des charges qui seraient plus réfractaires et qui ne seraient pas compatibles avec les températures de fonctionnement requises par les catalyseurs de l'art antérieur, mais qui le deviennent si on utilise les catalyseurs selon l'invention.

## Revendications

1. Procédé d'hydrotraitement d'au moins une coupe gazole d'au moins une coupe gazole ayant une température moyenne pondérée (TMP) comprise entre 240°C et 350°C, opérant à une température comprise entre 250°C et 400°C, à une pression totale comprise entre 2 MPa et 10 MPa avec un ratio volume d'hydrogène par volume de charge hydrocarbonée compris entre 100 et 800 litres par litre et à une Vitesse Volumique Horaire (VVH) définie par le rapport du débit volumique de charge hydrocarbonée liquide par le volume de catalyseur chargé dans le réacteur comprise entre 1 et 10 h$^{-1}$, ledit procédé utilisant au moins un catalyseur comprenant au moins un métal du groupe VIB et/ou au moins un métal du groupe VIII de la classification périodique et un support comprenant une alumine mésoporeuse amorphe, ledit procédé comprenant au moins les étapes suivantes de préparation de ladite alumine :

   a) au moins une première étape a) de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 40 et 100%, le taux d'avancement étant défini comme étant la proportion d'alumine formée en équivalent $Al_2O_3$ lors de ladite étape a) de précipitation par rapport à la quantité totale d'alumine formée à l'issue de la ou les étapes de précipitation, ladite étape a) opérant à une température comprise entre 10 et 50 °C, et pendant une durée comprise entre 2 minutes et 30 minutes,
   b) une étape de traitement thermique de la suspension obtenue à l'issue de l'étape a), à une température comprise entre 50 et 200°C pendant une durée comprise entre 30 minutes et 5 heures permettant l'obtention d'un gel d'alumine,
   c) une étape de filtration de la suspension obtenue à l'issue de l'étape b) de traitement thermique, suivie d'au moins une étape de lavage du gel obtenu,
   d) une étape de séchage du gel d'alumine obtenu à l'issue de l'étape c) pour obtenir une poudre,
   e) une étape de mise en forme de la poudre obtenue à l'issue de l'étape d) pour obtenir le matériau cru,
   f) une étape de traitement thermique du matériau cru obtenu à l'issue de l'étape e) à une température comprise entre 500 et 1000°C, en présence ou non d'un flux d'air contenant jusqu'à 60% en volume d'eau.

2. Procédé selon la revendication 1 dans lequel la coupe gazole utilisée est choisie parmi les coupes gazoles issues de la distillation directe seule ou en mélange avec au moins une coupe issue d'une unité de cokéfaction, ou au moins une coupe issue du craquage catalytique ou encore au moins une coupe gazole provenant d'autres procédés de conversion tels que l'hydrocraquage doux ou l'hydrotraitement des résidus.

3. Procédé selon l'une des revendications 1 ou 2 dans lequel les éléments du groupe VIII sont choisis parmi le cobalt et le nickel, pris seuls ou en mélange.

4. Procédé selon l'une des revendications 1 à 3 dans lequel les éléments du groupe VIB sont choisis parmi le tungstène et le molybdène, pris seuls ou en mélange.

5. Procédé selon l'une des revendications 1 à 4 dans lequel dans le cas où le catalyseur comprend au moins un métal du groupe VIB en combinaison avec au moins un métal non noble du groupe VIII, la teneur en métal du groupe VIB est comprise entre 10 et 35% en poids d'oxyde par rapport à la masse totale dudit catalyseur, et la teneur en métal non noble du groupe VIII est comprise entre 1 et 10% en poids d'oxyde par rapport à la masse totale dudit catalyseur.

6. Procédé selon l'une des revendications 1 à 5 dans lequel le catalyseur contient au moins un élément dopant choisi parmi le phosphore, le bore, le fluor ou le silicium, seul ou en mélange.

7. Procédé selon la revendication 6 dans lequel la teneur en phosphore dans ledit catalyseur est comprise entre 0,5 et 15 % poids de $P_2O_5$.

8. Procédé selon l'une des revendications 1 à 7 dans lequel le support du catalyseur comprend une alumine mésoporeuse amorphe présentant une connectivité (Z) comprise entre 3 et 7.

9. Procédé selon l'une des revendications 1 à 8 dans lequel le catalyseur présente une connectivité (Z) comprise entre 3 et 7.

10. Procédé selon l'une des revendications 1 à 9 dans lequel le support du catalyseur présente la distribution poreuse suivante, mesurée par porosimétrie au mercure :

   - le pourcentage de volume compris dans les pores de taille comprise et 2 et 6 nm, par rapport au volume poreux total, est compris entre 1 et 25 %,
   - le pourcentage de volume compris dans les pores de tailles supérieure à 6 nm et inférieure à 15 nm représente entre 60 et 95 % du volume poreux total,
   - le pourcentage de volume compris dans les pores de taille comprise entre 15 et 50 nm représente 0 à 8 % du volume poreux total et,
   - le pourcentage de volume compris dans les pores de taille comprise entre 50 et 7000 nm qui correspond au volume macroporeux représente 0 à 5 %.

11. Procédé selon l'une des revendications 1 à 10 dans lequel ledit support présente un diamètre médian des mésopores mesuré par porosimétrie au mercure déterminé en volume compris entre 7 et 12,5 nm.

12. Procédé selon l'une des revendications 1 à 11 dans lequel ledit support présente un volume des mésopores mesuré par porosimétrie au mercure, compris entre 0,5 et 0,8 ml/g.

13. Procédé selon l'une des revendications 1 à 12 dans lequel ledit catalyseur présente la distribution poreuse suivante déterminé par prosimètre au mercure:

   - le pourcentage de volume compris dans les pores de taille comprise entre 2 et 6 nm, par rapport au volume poreux total est compris entre 1 et 25 %,
   - le pourcentage de volume compris dans les pores de tailles supérieure à 6 nm et inférieure à 15 nm représente entre 60 et 95 % du volume poreux total,
   - le pourcentage de volume compris dans les pores de taille comprise entre 15 et 50 nm représente 0 à 15 % du volume poreux total et,
   - le pourcentage de volume compris dans les pores de taille comprise entre 50 et 7000 nm qui correspond au volume macroporeux représente 0 à 5 % du volume poreux total.

14. Procédé selon l'une des revendications 1 à 13 dans lequel ledit catalyseur présente un volume poreux total mesuré par porosimétrie au mercure supérieur ou égal à 0,35 ml/g.

**Patentansprüche**

1. Verfahren zur Hydrobehandlung mindestens eines Gasölschnitts mit einer gewichteten mittleren Temperatur (TMP) im Bereich zwischen 240 °C und 350 °C, das bei einer Temperatur im Bereich zwischen 250 °C und 400 °C, bei einem Gesamtdruck im Bereich zwischen 2 MPa und 10 MPa mit einem Verhältnis von Wasserstoffvolumen zu Volumen der Kohlenwasserstoffcharge im Bereich zwischen 100 und 800 Liter pro Liter und einer Raumgeschwindigkeit pro Stunde (VHS), definiert durch das Verhältnis des Volumenstroms der flüssigen Kohlenwasserstoffcharge zum Volumen des in den Reaktor geladenen Katalysators, im Bereich zwischen 1 und 10 h$^{-1}$ arbeitet, wobei das Verfahren mindestens einen Katalysator verwendet, der mindestens ein Metall der Gruppe VIB und/oder mindestens ein Metall der Gruppe VIII des Periodensystems der Elemente und einen Träger umfasst, der ein mesoporöses amorphes Aluminiumoxid umfasst, wobei das Verfahren mindestens die folgenden Schritte zur Herstellung des Aluminiumoxids umfasst:

a) mindestens einen ersten Schritt a) zum Ausfällen von Aluminiumoxid in wässrigem Reaktionsmedium, mindestens einem basischen Vorläufer, ausgewählt aus Natriumaluminat, Kaliumaluminat, Ammoniak, Natriumhydroxid und Kaliumhydroxid und mindestens ein saurer Vorläufer, ausgewählt aus Aluminiumsulfat, Aluminiumchlorid, Aluminiumnitrat, Schwefelsäure, Chlorwasserstoffsäure und Salpetersäure, wobei mindestens einer der basischen oder sauren Vorläufer Aluminium umfasst, wobei der jeweilige Durchfluss der sauren und basischen Vorläufer derart ausgewählt ist, dass ein pH-Wert des Reaktionsmediums im Bereich zwischen 8,5 und 10,5 erhalten wird und der Durchfluss des oder der sauren und basischen Vorläufer, der/die Aluminium enthält/enthalten, derart eingestellt ist, dass eine Fortschrittsrate des ersten Schritts im Bereich zwischen 40 und 100 % erhalten wird, wobei die Fortschrittsrate definiert ist als der Anteil an Aluminiumoxid, gebildet als $Al_2O_3$-Äquivalent während des Schritts a} zum Ausfällen, bezogen auf die Aluminiumoxidgesamtmenge, die am Ende des oder der Ausfällungsschritts(e) gebildet wird, wobei Schritt a) bei einer Temperatur im Bereich zwischen 10 und 50 °C, und für eine Dauer im Bereich zwischen 2 Minuten und 30 Minuten arbeitet.

b) einen Schritt zur Wärmebehandlung der am Ende von Schritt a) erhaltenen Suspension bei einer Temperatur im Bereich zwischen 50 und 200 °C während einer Dauer im Bereich zwischen 30 Minuten und 5 Stunden, die den Erhalt eines Aluminiumoxidgels ermöglicht,

c) einen Schritt zum Filtrieren der am Ende von Schritt b) zur Wärmebehandlung erhaltenen Suspension, gefolgt von mindestens einem Schritt zum Waschen des erhaltenen Gels,

d) ein Schritt zum Trocknen des in Schritt c) erhaltenen Aluminiumoxidgels zum Erhalt eines Pulvers,

e) einen Schritt zum Formen des in Schritt d) erhaltenen Pulvers zur Gewinnung des Rohmaterials,

f) einen Schritt zur Wärmebehandlung des am Ende von Schritt e) erhaltenen Rohmaterials bei einer Temperatur im Bereich zwischen 500 und 1.000 °C in Gegenwart oder Abwesenheit eines Luftstroms, der bis zu 60 Vol.-% Wasser enthält.

2. Verfahren nach Anspruch 1, wobei der verwendete Gasölschnitt ausgewählt ist aus Gasölschnitten aus der Direktdestillation allein oder im Gemisch mit mindestens einem Schnitt aus einer Verkokungseinheit, oder mindestens einem Schnitt aus dem katalytischen Cracken oder auch mindestens einem Gasölschnitt, der aus anderen Umwandlungsverfahren stammt, wie beispielsweise mildem Hydrocracken oder der Hydrobehandlung der Rückstände.

3. Verfahren nach einem der Ansprüche 1 oder 2, wobei die Elemente der Gruppe VIII ausgewählt sind aus Cobalt und Nickel, allein oder im Gemisch.

4. Verfahren nach einem der Ansprüche 1 bis 3, wobei die Elemente der Gruppe VIB ausgewählt sind aus Wolfram und Molybdän, allein oder im Gemisch.

5. Verfahren nach einem der Ansprüche 1 bis 4, wobei in dem Fall, in dem der Katalysator mindestens ein Metall der Gruppe VIB in Kombination mit mindestens einem Nichtedelmetall der Gruppe VIII umfasst, der Gehalt an Metall der Gruppe VIB im Bereich zwischen 10 und 35 Gew.-% Oxid, bezogen auf die Gesamtmasse des Katalysators, und der Gehalt an Nichtedelmetall der Gruppe VIII im Bereich zwischen 1 und 10 Gew.-% Oxid, bezogen auf die Gesamtmasse des Katalysators, liegt.

6. Verfahren nach einem der Ansprüche 1 bis 5, wobei der Katalysator mindestens ein Dotierungselement, ausgewählt aus Phosphor, Bor, Fluor oder Silicium, allein oder im Gemisch enthält.

7. Verfahren nach Anspruch 6, wobei der Phosphorgehalt in dem Katalysator im Bereich zwischen 0,5 und 15 Gew.-% $P_2O_5$ liegt.

8. Verfahren nach einem der Ansprüche 1 bis 7, wobei der Träger des Katalysators ein mesoporöses amorphes Aluminiumoxid umfasst, das eine Konnektivität (Z) im Bereich zwischen 3 und 7 aufweist.

9. Verfahren nach einem der Ansprüche 1 bis 8, wobei der Katalysator eine Konnektivität (Z) im Bereich zwischen 3 und 7 aufweist.

10. Verfahren nach einem der Ansprüche 1 bis 9, wobei der Träger des Katalysators die folgende Porenverteilung aufweist, gemessen mittels Quecksilberporosimetrie:

- der Volumenprozentanteil, der in den Poren mit einer Größe im Bereich zwischen 2 und 6 nm enthalten ist, bezogen auf das Gesamtporenvolumen, liegt im Bereich zwischen 1 und 25 %,
- der Volumenprozentanteil, der in den Poren mit einer Größe von mehr als 6 nm und kleiner als 15 nm enthalten ist, stellt zwischen 60 und 95 % des Gesamtporenvolumens dar,
- der Volumenprozentanteil, der in den Poren mit einer Größe im Bereich zwischen 15 und 50 nm enthalten ist, stellt 0 bis 8 % des Gesamtporenvolumens dar, und
- der Volumenprozentanteil, der in den Poren mit einer Größe im Bereich zwischen 50 und 7.000 nm enthalten ist, der dem Makroporenvolumen entspricht, stellt 0 bis 5 % dar.

**11.** Verfahren nach einem der Ansprüche 1 bis 10, wobei der Träger einen mittleren Durchmesser der Mesoporen, gemessen mittels Quecksilberporosimetrie, volumenmäßig bestimmt, im Bereich zwischen 7 und 12,5 nm aufweist.

**12.** Verfahren nach einem der Ansprüche 1 bis 11, wobei der Träger ein Mesoporenvolumen, gemessen mittels Quecksilberporosimetrie, im Bereich zwischen 0,5 und 0,8 ml/g aufweist,

**13.** Verfahren nach einem der Ansprüche 1 bis 12, wobei der Katalysator die folgende Porenverteilung, bestimmt mittels Quecksilberporosimeter, aufweist:

- der Volumenprozentanteil, der in den Poren mit einer Größe im Bereich zwischen 2 und 6 nm enthalten ist, bezogen auf das Gesamtporenvolumen, liegt im Bereich zwischen 1 und 25 %,
- der Volumenprozentanteil, der in den Poren mit einer Größe von mehr als 6 nm und kleiner als 15 nm enthalten ist, stellt zwischen 60 und 95 % des Gesamtporenvolumens dar,
- der Volumenprozentanteil, der in den Poren mit einer Größe im Bereich zwischen 15 und 50 nm enthalten ist, stellt 0 bis 15 % des Gesamtporenvolumens dar, und
- der Volumenprozentanteil, der in den Poren mit einer Größe im Bereich zwischen 50 und 7.000 nm enthalten ist, der dem Makroporenvolumen entspricht, stellt 0 bis 5 % des Gesamtporenvolumens dar.

**14.** Verfahren nach einem der Ansprüche 1 bis 13, wobei der Katalysator ein Gesamtporenvolumen, gemessen mittels Quecksilberporosimetrie, größer oder gleich 0,35 ml/g aufweist.

**Claims**

**1.** Hydroprocessing process of at least one gas oil cut having a weighted mean temperature (TMP) between 240°C and 350°C, operating at a temperature between 250°C and 400°C, at a total pressure between 2 MPa and 10 MPa with a ratio of hydrogen volume to volume of hydrocarbon-containing feedstock between 100 and 800 litres per litre and at an Hourly Volume Rate (HVR) which is defined by the ratio of the volume flow rate of liquid hydrocarbon-containing feedstock to volume of catalyst fed into the reactor between 1 and 10 h$^{-1}$, using a catalyst comprising at least one metal of the group VIB and/or at least one metal of the group VIII of the periodic classification and a support comprising an amorphous mesoporous alumina, the hydroprocessing process comprising at least the following steps of preparation of said alumina :

a) at least a first precipitation step a) of alumina, in an aqueous reaction medium, from at least one basic precursor selected from sodium aluminate, potassium aluminate, ammonia, sodium hydroxide and potassium hydroxide and at least one acid precursor selected from aluminium sulphate, aluminium chloride, aluminium nitrate, sulphuric acid, hydrochloric acid and nitric acid, wherein at least one of the basic or acid precursors comprises aluminium, the relative flow rate of the acid and basic precursors is selected so as to obtain a pH of the reaction medium between 8.5 and 10.5 and the flow rate of the acid and basic precursor(s) containing aluminium is adjusted so as to obtain a progress rate of the first step between 40 and 100%, the progress rate being defined as being the proportion of alumina formed as equivalent $Al_2O_3$ during the precipitation step a) in relation to the total quantity of alumina formed at the end of the precipitation step(s), the step a) operating at a temperature between 10 and 50°C, and for a time between 2 minutes and 30 minutes,
b) a thermal processing step of the suspension obtained at the end of the step a), at a temperature between 50 and 200°C for a time between 30 minutes and 5 hours allowing an alumina gel to be obtained,
c) a filtering step of the suspension obtained at the end of the thermal processing step b), followed by at least one washing step of the gel obtained,
d) a drying step of the alumina gel obtained at the end of the step c) in order to obtain a powder,
e) a shaping step of the powder obtained at the end of the step d) in order to obtain the raw material,
f) a thermal processing step of the raw material obtained at the end of the step e) at a temperature between 500 and 1000°C, with or without an air flow containing up to 60% by volume of water.

2. Process according to claim 1, wherein the gas oil cut used is selected from the gas oil cuts from direct distillation alone or in admixture with at least one cut from a coking unit, or at least one cut from the catalytic cracking or at least one gas oil cut from other conversion processes such as mild hydrocracking or hydroprocessing of the residues.

3. Process according to either of claims 1 or 2, wherein the elements of the group VIII are selected from cobalt and nickel, taken alone or in admixture.

4. Process according to any one of claims 1 to 3, wherein the elements of the group VIB are selected from tungsten and molybdenum, taken alone or in admixture.

5. Process according to any one of claims 1 to 4, wherein in the case in which the catalyst comprises at least one metal of the group VIB in combination with at least one non-noble metal of the group VIII, the content of metal of the group VIB is between 10 and 35% by weight of oxide in relation to the total mass of the catalyst, and the content of non-noble metal of the group VIII is between 1 and 10% by weight of oxide in relation to the total mass of the catalyst.

6. Process according to any one of claims 1 to 5, wherein the catalyst contains at least one doping element selected from phosphorus, boron, fluorine or silicon, alone or in admixture.

7. Process according to claim 6, wherein the content of phosphorus in the catalyst is between 0.5 and 15% by weight of $P_2O_5$.

8. Process according to any one of claims 1 to 7, wherein the support of the catalyst comprises an amorphous mesoporous alumina having a connectivity (Z) between 3 and 7.

9. Process according to any one of claims 1 to 8, wherein the catalyst has a connectivity (Z) between 3 and 7.

10. Process according to any one of claims 1 to 9, wherein the support of the catalyst has the following porous distribution, measured by mercury porosimetry:

    - the volume percentage contained in the pores having a size between 2 and 6 nm, in relation to the total porous volume, is between 1 and 25%,
    - the volume percentage contained in the pores having sizes greater than 6 nm and less than 15 nm constitutes between 60 and 95% of the total porous volume,
    - the volume percentage contained in the pores having a size between 15 and 50 nm constitutes from 0 to 8% of the total porous volume and
    - the volume percentage contained in the pores having a size between 50 and 7000 nm which corresponds to the macroporous volume constitutes from 0 to 5%.

11. Process according to any one of claims 1 to 10, wherein the support has a median diameter of the mesopores measured by mercury porosimetry established by volume between 7 and 12.5 nm.

12. Process according to any one of claims 1 to 11, wherein the support has a volume of the mesopores measured by mercury porosimetry between 0.5 and 0.8 ml/g.

13. Process according to any one of claims 1 to 12, wherein the catalyst has the following porous distribution established by mercury porosimetry:

    - the volume percentage contained in the pores having a size between 2 and 6 nm, in relation to the total porous volume is between 1 and 25%,
    - the volume percentage contained in the pores having sizes greater than 6 nm and less than 15 nm constitutes between 60 and 95% of the total porous volume,
    - the volume percentage contained in the pores having a size between 15 and 50 nm constitutes from 0 to 15% of the total porous volume and
    - the volume percentage contained in the pores having a size between 50 and 7000 nm which corresponds to the macroporous volume constitutes from 0 to 5% of the total porous volume.

14. Process according to any one of claims 1 to 13, wherein the catalyst has a total porous volume measured by mercury porosimetry greater than or equal to 0.35 ml/g.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7790652 B
- FR 2972648
- US 7790562 B

**Littérature non-brevet citée dans la description**

- **J. SCHERZER ; A. J. GRUIA.** Hydrocracking Science and Technology. Marcel Dekker Inc, 1996
- **B. S. CLAUSEN ; H. T. TOPSØE ; F. E. MASSOTH.** Catalysis Science and Technology. Springer-Verlag, 1996, vol. 11
- **LIU H. ; ZHANG L. ; SEATON N.A.** *Chemical Engineering Science,* 1992, vol. 47 (17-18), 4393-4404
- **JEAN CHARPIN ; BERNARD RASNEUR.** *Techniques de l'ingénieur, traité analyse et caractérisation,* 1050-5
- Adsorption by powders and porous solids. Principles, methodology and applications. Academic Press, 1999
- **E.P.BARRETT ; L.G.JOYNER ; P.P.HALENDA.** *The Journal of American Society,* 1951, vol. 73, 373
- *The Journal of American Society,* 1938, vol. 60, 309
- **D.R. LIDE.** CRC Handbook of Chemistry and Physics. CRC press, 2000
- *Appl. Cryst.,* 1978, vol. 11, 102-113
- **ASEP BAYU DANI NANDIYANTO ; KIKUO OKUYAMA.** *Advanced Powder Technology,* 2011, vol. 22, 1-19